# EUROPÄISCHE PATENTSCHRIFT

(11) **EP 3 221 590 B1**
(45) Veröffentlichungstag und Bekanntmachung des Hinweises auf die Patenterteilung: **17.10.2018**
(21) Anmeldenummer: 15797667.1
(22) Anmeldetag: 20.11.2015
(51) Int. Cl.: F04D 25/16

(54) **GETRIEBE UND GETRIEBETURBOMASCHINE**
TRANSMISSION AND TRANSMISSION TURBOMACHINE
RÉDUCTEUR ET TURBOMACHINE À RÉDUCTEUR

(30) Priorität: 21.11.2014 DE 102014223808
(43) Veröffentlichungstag der Anmeldung: 27.09.2017
(73) Patentinhaber: Voith Patent GmbH, 89522 Heidenheim (DE)
(72) Erfinder: ZIMMERMANN, Arne, 87509 Immenstadt (DE); RASCH, Joachim, 87534 Oberstaufen (DE); GERMANN, Sabine, 87545 Burgberg (DE)
(86) Internationale Anmeldenummer: PCT/EP2015/077182
(87) Internationale Veröffentlichungsnummer: WO 2016/079281

(56) Entgegenhaltungen:
- EP-A1- 0 512 568
- DE-A1- 3 441 699
- FR-A- 706 698
- US-A- 1 862 512

## Beschreibung

Die Erfindung betrifft ein Getriebe, insbesondere Integralgetriebe für eine Getriebeturbomaschine, im Einzelnen mit den Merkmalen aus dem Oberbegriff von Anspruch 1. Die Erfindung betrifft ferner eine Getriebeturbomaschine und ein Verfahren zur Montage einer derartigen Getriebeturbomaschine.

Eine Getriebeturbomaschine integriert über ein integriertes Getriebe (Integralgetriebe) An- und/oder Abtriebsaggregate zu einem Maschinenstrang. Als Antriebsaggregate sind für sich allein oder in Kombination Dampfturbinen, Gasturbinen, Expander sowie Motoren möglich und als Abtriebsaggregate sind für sich allein oder in Kombination Kompressoren sowie Generatoren möglich. Die Getriebeturbomaschinen sind somit als Getriebeverdichter oder Expanderanlage oder eine Kombination aus beiden ausgebildet. Im Allgemeinen ist eine komplette Getriebeturbomaschine als Strang ausgebildet, wobei über das Getriebe in Abhängigkeit der Ausbildung der Getriebeturbomaschine die An- und Abtriebsaggregate, insbesondere Dampfturbinen, Gasturbinen, Expander sowie Motoren und Kompressoren miteinander prozesstechnisch zusammenwirken. Derartige Getriebeturbomaschinen und in diese integrierte Getriebe sind in einer Vielzahl von Ausführungen aus dem Stand der Technik vorbekannt. Stellvertretend wird auf nachfolgend genannte Druckschriften verwiesen:
EP 512 568 A1
EP 2 128 448 A2
EP 1 691 081 B1
DE 10 2012 022 131 A1
DE 10 2011 003 525 A1
DE 10 2013 208 564 A1

Die integrierten Getriebe sind im Allgemeinen durch eine mit einem Antriebsaggregat, beispielsweise in Form eines Elektromotors oder einer Turbine, insbesondere Dampf- oder Gasturbine verbundene Antriebswelle charakterisiert. Die Antriebswelle trägt ein schrägverzahntes Antriebszahnrad, das mit zumindest einem, vorzugsweise einer Mehrzahl von Abtriebszahnrädern wenigstens mittelbar in Eingriff steht. Die Abtriebszahnräder sind jeweils drehfest (rotationsfest) mit Abtriebswellen verbunden oder integral mit diesen ausgeführt.

Aus den Druckschriften EP 512 568 A1, EP 1 691 081 B1 und EP 2 128 448 A2 ist beispielsweise jeweils eine Ausführung vorbekannt, bei welcher das Antriebszahnrad als Zwischenrad zwischen einem Abtriebszahnrad und einem als Großrad bezeichneten Zahnrad angeordnet ist. Die Dreh- bzw. Rotationsachsen von Großrad, An- und Abtriebszahnrad sind dabei in einer Ebene angeordnet, wodurch eine einfache Getriebegehäusegestaltung realisierbar ist, da das Gehäuse über eine Hauptteilfuge, die durch die Lagerbereiche der vorgenannten Zahnräder verläuft, in zwei Teilgehäuseeinheiten unterteilbar ist. Die beiden Teilgehäuseeinheiten werden bei der Montage an der Hauptteilfuge zusammengefügt, wobei in Einbaulage betrachtet die erste untere Teilgehäuseeinheit beispielsweise auf einem Fundament angeordnet ist. Die untere Teilgehäuseeinheit ist mit der zweiten, darüber angeordneten zweiten Teilgehäuseeinheit verbunden. Gegebenenfalls ist bei Vorsehen wenigstens eines weiteren außerhalb der Hauptteilfuge angeordneten Abtriebszahnrades eine weitere dritte Teilgehäuseeinheit separat nach Montage der weiteren Abtriebswellen mit dem zweiten oberhalb der unteren Teilgehäuseeinheit angeordneten Teilgehäuseeinheit verbunden. Die zweite Teilgehäuseeinheit kann daher auch als mittlere Gehäuseeinheit bezeichnet werden. Die mit den Abtriebszahnrädern gekoppelten Wellen sind mit Abtriebsaggregaten, beispielsweise Kompressoren einzelner Verdichterstufen gekoppelt. Die Montage des Getriebes kann aufgrund der erforderlichen Ausrichtung der mit den Abtriebsaggregaten gekoppelten Wellen nicht als vollständig vormontiertes Getriebe erfolgen. Daher erfolgt bei Ausbildung der Turbomaschine als Getriebeverdichter in einem ersten Verfahrensschritt die Bereitstellung eines in die beiden oder drei Teilgehäuseeinheiten unterteilten Gehäuses, wobei die untere Teilgehäuseeinheit in Einbaulage positioniert wird und Großrad und ggf. ein Zwischenrad in der Hauptteilfuge gelagert werden. In Abhängigkeit der Größe der Turbomaschinen wird zumindest ein Teil oder die gesamte Rückwand des Verdichters, ggf. mit bereits integrierter Dichtung an die untere Teilgehäuseeinheit montiert. Im Anschluss daran erfolgt die Montage der einzelnen in der Hauptteilfuge angeordneten Abtriebszahnräder und der diese tragenden Wellen. Dabei werden die Laufräder der Verdichter auf den die Abtriebszahnräder tragenden Wellen montiert, d.h. mit diesen drehfest verbunden. Nach dem Anbau des Verdichtergehäuses an die Rückwände der einzelnen Verdichter wird die zweite obere Teilgehäuseeinheit komplett aufgesetzt und mit der unteren Teilgehäuseeinheit verbunden. Im Anschluss daran erfolgen bei Vorsehen weiterer, mit dem Großrad in Eingriff stehender und in vertikaler Richtung versetzt zur Drehachse dessen angeordneter Abtriebszahnräder die gleichen Montageschritte erneut an einer vertikal zur Hauptteilfuge versetzten weiteren oberen Teilfuge. Die Demontage erfolgt in umgekehrter Reihenfolge. Die einzelnen Lagerstellen sind über abnehmbare Lagerdeckel geschützt. Um an einzelnen Abtriebswellen bei Montage oder Demontage arbeiten zu können, insbesondere zu Einstellungs- und Wartungszwecken, ist es erforderlich, dass die obere Teilgehäuseeinheit vollständig entfernt ist. Dies bedingt bei bereits montierter Getriebeturbomaschine eine aufwendige Demontage aller mit den Drehachsen vertikal oberhalb des Großrades angeordneten Abtriebszahnräder und Abtriebsaggregate und der mit der zweiten Teilgehäuseeinheit verbundenen dritten Teilgehäuseeinheit. Des Weiteren stützt bei Montage und Demontage im Zustand der entfernten mit der unteren Teilgehäuseeinheit verbundenen mittleren Teilgehäuseeinheit die untere Teilgehäuseeinheit die in der Hauptteilfuge gelagerten An- sowie Abtriebszahnräder, sowie das Großrad, was zu Verformungen der unteren Teilgehäuseeinheit, insbesondere zum Auswölben und Aufklaffen der unteren Teilgehäuseeinheit führen kann. Diese Verformungen führen beim späteren erneuten Zusammenfügen mit den oberen Teilgehäuseeinheiten zu Paßungenauigkeiten, Dichtheitsproblemen, einer Verschiebung in der Ausrichtung der einzelnen, die Zahnräder tragenden Wellen, insbesondere der Abtriebswellen, Spielveränderungen sowie einer Verschlechterung der Verzahnungstragbilder.
Eine analoge Problematik ergibt sich auch bei der Ausbildung des Gehäuses aus zwei Teilgehäuseeinheiten für eine Anordnung gemäß DE 10 2013 208 564 A1 mit einem in vertikaler Richtung versetzten Großrad bzw. gestufter Hauptteilfuge.

DE 10 2011 003 525 A1 offenbart eine Gehäuseausführung mit mehreren übereinander angeordneten Teilgehäuseeinheiten, wobei zwei hinsichtlich ihrer Drehachsen vertikal zur Drehachse des Großrades versetzte und mit einem Großrad kämmende Zahnräder in zwei Teilgehäuseeinheiten gelagert sind, die über eine Teilfuge mit Stufensprung verbunden sind. Bei diesen Teilgehäuseeinheiten handelt es sich um eine obere und eine mittlere Teilgehäuseeinheit eines Gehäuses. Das Großrad selbst und zwei weitere mit diesem in Eingriff stehende Zahnräder bzw. deren Wellen sind dabei in der in Einbaulage mittleren Teilgehäuseeinheit und einer unteren Teilgehäuseeinheit gelagert. Auch bei dieser Ausführung sind die das Großrad aufnehmende Teilgehäuseeinheiten einteilig ausgeführt, weshalb bei einer erforderlichen Demontage die gleichen Probleme wie für vorgenannte Ausführung beschrieben bestehen.

Der Erfindung liegt daher die Aufgabe zugrunde, ein Getriebe, insbesondere Integralgetriebe für eine Getriebeturbomaschine der eingangs genannten Art derart weiterzuentwickeln, dass die Nachteile des Standes der Technik vermieden werden. Das Getriebe soll einfach montier- und demontierbar sein und eine gute Zugängigkeit zu den einzelnen in der Hauptteilfuge gelagerten Wellen und angeordneten Lagern gewährleisten. Paßungenauigkeiten und Dichtheitsproblem an der Hauptteilfuge und ferner die durch die Verformung bedingten Veränderungen in den Spielen (Axialspiel und Radialspiel) zwischen den einzelnen Komponenten sowie der Ausrichtung der einzelnen Bauteile und Wellen zueinander und an den Verzahnungstragbildern sollen sicher vermieden werden.
Die erfindungsgemäße Lösung wird durch die Merkmale der Ansprüche 1, 17 und 20 charakterisiert. Vorteilhafte Ausgestaltungen sind in den Unteransprüchen beschrieben.
Ein Getriebe, insbesondere Integralgetriebe für eine Getriebeturbomaschine, umfassend:
- zumindest zwei mit einem Großrad wenigstens mittelbar in Eingriff stehende Zahnräder, die jeweils mit einer mit einem An- und/oder Abtriebsaggregat verbindbaren Welle verbunden oder integral ausgeführt sind und
- ein Gehäuse, in welchem die Zahnräder beziehungsweise die mit diesen verbundenen Wellen gelagert sind und das zumindest zwei Teilgehäuseeinheiten- eine erste Teilgehäuseeinheit und eine zweite Teilgehäuseeinheit - umfasst, die über eine durch den Lagerbereich zumindest eines mit einem Großrad wenigstens mittelbar in Eingriff stehenden Zahnrades beziehungsweise der mit diesem verbundenen Welle verlaufende Hauptteilfuge verbindbar sind,
ist erfindungsgemäß dadurch gekennzeichnet, dass die obere der beiden miteinander zu verbindenden Teilgehäuseeinheiten aus zumindest drei Gehäuseteilen - einem Mittelgehäuseteil, welches insbesondere dem Großrad zugeordnet ist, und zwei Seitengehäuseteilen gebildet wird, wobei das Mittelgehäuseteil mit einem einzelnen Seitengehäuseteil jeweils über eine in einem Winkel zur Hauptteilfuge ausgerichtete Teilfuge verbindbar ist.
Dabei nimmt das Mittelgehäuseteil insbesondere zumindest einen Teil des Großrades auf, d.h. das ein Teil des Großrades im vom Mittelgehäuseteil begrenzten Raum angeordnet ist. Zumindest ein oder mehrere in der Hauptteilfuge gelagerte und wenigstens mittelbar mit dem Großrad in Eingriff stehende Zahnräder sind dann von einem der Seitengehäuseteile zumindest teilweise aufgenommen, d.h. das ein Teil des jeweiligen von einem Seitengehäuse aufgenommenen Zahnrades im von diesen begrenzten Raum angeordnet ist.

Der Begriff Integralgetriebe steht für Getriebe, die in einer Getriebeturbomaschine, welche als Expansionsmaschine oder Kompressionsmaschine bzw. Getriebeverdichter oder eine Kombination aus beiden vorliegen kann. Integralgetriebe bedeutet insbesondere zudem, dass Expandergehäuse oder Kompressorgehäuse direkt an das Getriebegehäuse angeflanscht bzw. integriert werden.

Die Begriffe "Hauptteilfuge" und "Teilfuge" des Gehäuses beschreiben insbesondere die Grenzlinie/Grenzflächen zwischen zwei miteinander verbundenen Gehäusebauteilen des Gehäuses. Die Hauptteilfuge verläuft durch zumindest einen Lagerbereich eines mit dem Großrad wenigstens mittelbar, d.h. direkt oder über zwischengeordnete Zahnräder in Eingriff stehenden Zahnrades, vorzugsweise zumindest durch den Lagerbereich zumindest eines Abtriebszahnrades.

Die Unterteilung der zweiten Teilgehäuseeinheit in die zumindest drei Gehäuseteile erfolgt quasi entlang der die Lagerbereiche der einzelnen zahnradtragenden Wellen aufnehmenden Seite der Hauptteilfuge betrachtet, d.h. nicht entlang der Drehachsen der in diesem gelagerten Wellen betrachtet sondern quer dazu.

Insbesondere erfolgt die Ausrichtung der einzelnen Teilfuge an der zweiten Teilgehäuseeinheit in einer Ansicht des Getriebes im montierten Zustand auf die Getriebeseite betrachtet, an welcher die Hauptteilfuge durch die Lagerbereiche zumindest eines mit dem Großßrad wenigstens mittelbar in Eingriff stehenden Zahnrades, vorzugsweise eines direkt mit diesem in Eingriff stehenden Zahnrades verläuft, in einem Winkel zur Hauptteilfuge, vorzugsweise senkrecht zur Hauptteilfuge. Die Teilfugen der zweiten Teilgehäuseeinheit sind somit derart angeordnet, dass bei Lösung der Verbindungen der Seitengehäuseteile mit der ersten Teilgehäuseeinheit an der Hauptteilfuge und der Verbindungen zum Mittelgehäuseteil eine Bewegung dieser Seitengehäuseteile vom Mittelgehäuseteil weg und ein Zugang zu den in der Hauptteilfuge gelagerten Wellen der mit dem Großrad in Eingriff stehenden Zahnräder möglich ist. Insbesondere ist die einzelne Teilfuge vorzugsweise derart angeordnet, dass diese im montierten Zustand der beiden Teilgehäuseeinheiten zwischen der Welle des Großrades und der Welle eines mit dem Großrad wenigstens mittelbar in Eingriff stehenden Zahnrades, insbesondere eines direkt mit dem Großrad in Eingriff stehenden und in der Hauptteilfuge gelagerten Zahnrades verlaufend angeordnet ist. In einer Ansicht des Getriebes auf die Stirnseiten von Großrad und der mit diesen in Eingriff stehenden Zahnräder betrachtet verläuft die einzelne Teilfuge der zweiten Teilgehäuseeinheit ausgehend von der Hauptteilfuge dabei insbesondere mit einer Richtungskomponente in vertikaler Richtung. Mit anderen Worten, die Teilfuge verläuft bei Projizierung der einzelnen Teilfuge mit den Drehachsen der in der Hauptteilfuge gelagerten Wellen im montierten Zustand des Getriebes in eine gemeinsame Ebene zwischen diesen.

Das Getriebe umfasst dabei in Abhängigkeit der gewählten Konfiguration und Ausbildung der Getriebeturbomaschine vorzugsweise neben dem Großrad zumindest ein mit einem Abtriebsaggregat über eine Abtriebswelle koppelbares Abtriebszahnrad und zumindest noch ein oder mehrere weitere Zahnräder, ausgewählt aus der nachfolgenden Gruppe von Zahnrädern, welche jeweils wenigstens mittelbar mit dem Großrad in Eingriff stehen:
- ein weiteres zweites Abtriebszahnrad
- ein zwischen einem Abtriebszahnrad und dem Großrad angeordnetes Zwischenrad mit Zwischenradwelle;
- ein Antriebszahnrad mit Antriebswelle;
wobei die Hauptteilfuge durch die Lagerbereiche wenigstens zwei der Zahnräder, vorzugsweise durch die Lagerbereiche zumindest der Abtriebszahnräder, besonders bevorzugt durch die Lagerbereiche eines einzelnen

Abtriebszahnrades, des Antriebszahnrades und ggf. des Zwischenrades, ganz besonders bevorzugt durch die Lagerbereiche eines einzelnen Abtriebszahnrades, des Antriebszahnrades, des Großrades und des Zwischenrades, verläuft.

Die erfindungsgemäße Lösung erlaubt durch die Unterteilung der zweiten Teilgehäuseeinheit eine schnelle und einfache Zugängigkeit zu einzelnen Wellen und Lagern der im Gehäuse im Bereich der Hauptteilfuge gelagerten Zahnräder bei Montage und Demontage. Insbesondere ermöglicht die erfindungsgemäße Lösung bei Anordnung des Mittelgehäuseteils im Erstreckungsbereich des Großrades eine einfache und schnelle Zugängigkeit zu den einzelnen An- und/oder Abtriebswellen der mit dem Großrad wenigstens mittelbar in Eingriff stehenden Zahnräder durch Demontage lediglich der Seitengehäuseteile. Das Mittelgehäuseteil bleibt mit der ersten Teilgehäuseeinheit über die Hauptteilfuge verbunden. Bei Vorsehen weiterer Abtriebszahnräder, die mit dem Großrad in Eingriff stehen und der diese tragenden Wellen, deren Drehachsen versetzt zur Hauptteilfuge in einer weiteren Teilfuge am Mittelgehäuseteil gelagert sind, muss ein mit diesen verbundenes Abtriebsaggregat nicht erst aufwendig demontiert werden und wird weiter über das Mittelgehäuseteil an der ersten Teilgehäuseeinheit abgestützt.

Durch das Vorsehen einer Verbindung zwischen Mittelgehäuseteil und der ersten Teilgehäuseeinheit bei Montage und Beibehaltung dieser bei Demontage durch Demontage der Seitengehäuseteile wirkt das Mittelgehäuseteil ferner als Versteifungselement für die Verdichter- und/oder Expandergehäuse an der Hauptteilfuge. Das aus dem Stand der Technik beobachtete Auswölben der ersten Teilgehäuseeinheit und die dadurch bedingten Nachteile im Hinblick auf Paßungenauigkeiten, Dichtungsprobleme, Veränderungen in der Ausrichtung der einzelnen Wellen zueinander, des Spiels zwischen den einzelnen Komponenten sowie des Verzahnungstragbildes können ohne zusätzlich vorzusehende Versteifungsmaßnahmen an dieser sicher unterbunden werden.

Bezüglich der Lagerung des Großrades im Gehäuse selbst besteht eine Mehrzahl von Möglichkeiten. Das Großrad bzw. die mit diesem verbundene oder integral ausgebildete Großradwelle ist gemäß einer ersten Lagermöglichkeit in der Hauptteilfuge zwischen der ersten Teilgehäuseeinheit und dem Mittelgehäuseteil der zweiten Teilgehäuseeinheit gelagert. Gemäß einer zweiten Lagermöglichkeit in der ersten und damit unteren Teilgehäuseeinheit. Bei beiden Möglichkeiten stützt sich die Großradwelle direkt an der in Einbaulage unteren Teilgehäuseeinheit ab, so dass die Hauptfunktion des Mittelteils als Versteifungselement ist. Gemäß einer dritten Lagermöglichkeit kann die Lagerung auch direkt im Mittelgehäuseteil erfolgen, was sich dann an der unteren Teilgehäuseeinheit abstützt.

Bezüglich der Ausführung des Getriebes im Hinblick auf die in der Hauptteilfuge möglichen lagerbaren Zahnräder im Einzelnen besteht eine Mehrzahl von Möglichkeiten.

Gemäß einer ersten Grundkonfiguration ist das Großrad als ein Antriebszahnrad mit einer mit einem Antriebsaggregat verbindbaren Großradwelle ausgebildet. Die mit dem Großrad in Eingriff stehenden Zahnräder werden in einer ersten Variante von jeweils drehfest mit einer Abtriebswelle verbundenen Abtriebszahnrädern oder gemäß einer zweiten Variante mit einem Abtriebszahnrad in Eingriff stehenden Zahnrädern in Form von Zwischenrädern gebildet, wobei die zumindest zwei Teilgehäuseeinheiten über eine durch die Lagerbereiche zumindest eines der Abtriebszahnräder und/oder eines Zwischenrades beziehungsweise der jeweils mit diesen verbundenen Wellen verlaufende Hauptteilfuge verbindbar sind. Dabei sind auch Ausführungen denkbar, bei welchen das Großrad mit einem Abtriebszahnrad und einem Zwischenrad direkt in Eingriff steht.

In einer zweiten Grundkonfiguration wird eines der mit einem Großrad in Eingriff stehenden Zahnräder von einem drehfest mit einer Antriebswelle verbindbaren Antriebszahnrad gebildet. Gemäß einer ersten Variante ist ferner ein mit dem Großrad in Eingriff stehendes erstes Abtriebszahnrad mit Abtriebswelle oder gemäß einer zweiten Variante einem Zwischenrad gebildet, wobei die zumindest zwei Teilgehäuseeinheiten über eine durch die Lagerbereiche zumindest eines der Abtriebszahnräder, des Antriebszahnrades und/oder Zwischenrades beziehungsweise der mit diesen verbundenen Wellen verlaufende Hauptteilfuge verbindbar sind. In dieser zweiten Grundkonfiguration kann optional zusätzlich das Großrad mit einem Antriebsaggregat gekoppelt werden.

In einer Weiterbildung der zweiten Grundkonfiguration ist zumindest ein zweites mit dem Antriebszahnrad in Eingriff stehendes Abtriebszahnrad, welches mit einer zweiten Abtriebswelle verbunden ist, vorgesehen, wobei der Lagerbereich des zweiten Antriebszahnrades in der Hauptteilfuge angeordnet ist und das zweite Abtriebszahnrad vorzugsweise im das Antriebszahnrad wenigstens teilweise aufnehmenden Seitengehäuseteil aufgenommen ist. Dies erlaubt die einfache Integration eines Abtriebsaggregates, welches mit höherer Drehzahl angetrieben wird.

Zusätzlich oder alternativ zu den vorgenannten Varianten möglicher Getriebekonfigurationen kann das erste Abtriebszahnrad über ein Zwischenrad mit dem Großrad in Wirkverbindung stehend angeordnet und ausgebildet sein, wobei auch der Lagerbereich des Zwischenrades in der Hauptteilfuge angeordnet ist und das Zwischenrad wenigstens teilweise von dem mit dem Mittelgehäuseteil verbindbaren Seitengehäuseteil aufgenommen ist. Das Seitengehäuseteil ist dabei in einer ersten Variante derart ausgestaltet und angeordnet, das mit diesem in Eingriff stehende Abtriebszahnrad ebenfalls mit aufzunehmen. In einer zweiten Variante ist das das Zwischenrad aufnehmende Seitengehäuseteil mit einem weiteren Gehäuseteil verbunden, welches das mit dem Zwischenrad in Eingriff stehende Abtriebszahnrad wenigstens teilweise aufnimmt. In diesem Fall besteht die zweite Teilgehäuseeinheit aus zumindest vier Gehäuseteilen. Die zusätzliche Integration eines Zwischenrades im Getriebe bietet trotz vermehrter Bauteile den Vorteil einer deutlichen Steigerung der zu realisierenden Leistungsfähigkeit. Ferner kann unter Berücksichtigung eines durch die Größe der anzubauenden An- und Abtriebsaggregate vorgegebenen Mindestabstandes der einzelnen Ab- und Antriebswellen zueinander, der Teilkreisdurchmesser des Großrades und der Ritzel durch das zusätzliche Zwischenrad flexibel gewählt werden. Insbesondere kann bei einem Großrad mit unverändertem Teilkreisdurchmesser gegenüber einer Anordnung ohne Zwischenrad der zur Verfügung stehende Bauraum zur Anbringung der An- bzw. Abtriebsaggregate an das Gehäuse bzw. der Ritzel des Getriebes vergrößert werden.

In vorteilhafter Ausbildung sind das Antriebszahnrad und/oder die einzelnen Abtriebszahnräder als Ritzel ausgeführt, die drehfest mit Ritzelwellen verbunden sind oder mit diesen eine integrale Baueinheit bilden. Der Bauteil- und Montageaufwand wird dadurch erheblich minimiert. Die Verzahnungen sind vorzugsweise als Schrägverzahnungen ausgebildet. Die einzelnen An- und Abtriebswellen sind parallel zueinander angeordnet.

In einer vorteilhaften Ausführung des erfindungsgemäßen Getriebes ist die einzelne, zwischen dem Mittelgehäuseteil und einem Seitengehäuseteil der Teilgehäuseeinheit vorgesehene Teilfuge in einem Winkel im Bereich von 39° bis 150°, vorzugsweise 45° bis 135°, besonders bevorzugt 90° zur Hauptteilfuge verlaufend ausgebildet. Die senkrechte Ausbildung bietet den Vorteil einer kurzen Teilfuge und damit kleiner vorzusehender Dichtflächen, während die in den genannten Winkelbereichen ausgeführten Teilfugen Führungsfunktion bei der Montage und Demontage der Seitengehäuseteile übernehmen und somit das Ausrichten der Gehäusebestandteile erleichtern.

In einer weiteren vorteilhaften Ausführung ist die einzelne, zwischen Mittelgehäuseteil und einem Seitengehäuseteil der zweiten Teilgehäuseeinheit vorgesehene Teilfuge außerhalb des Lagerbereiches eines einzelnen Zahnrades, besonders bevorzugt außerhalb des Lagerbereiches des Großrades, vorzugsweise innerhalb des Kopfkreisdurchmessers des Großrades angeordnet bzw. innerhalb eines Erstreckungsbereiches, der dem Erstreckungsbereich des Kopfkreisdurchmessers bei Projizierung dessen in eine Ebene senkrecht zur Hauptteilfuge entspricht. Der Verbindungsbereich zwischen erster Teilgehäuseeinheit und Mittelgehäuseteil wird somit in einen Bereich verlegt, der durch Versteifung den Gewichts- und Verformungskräften, bedingt durch die fliegende Lagerung der einzelnen Abtriebsaggregate auf den jeweiligen in der Hauptteilfuge gelagerten Abtriebswellen, entgegenwirkt.

Die Ausbildung der Hauptteilfuge ist abhängig von der Anordnung der Drehachsen bzw. der Lagerbereiche der die Zahnräder tragenden Wellen.

Der Begriff "Drehachse" entspricht der geometrischen Achse, um welche die Rotation/Verdrehung der einzelnen Zahnräder erfolgt. Diese fällt in der Regel mit der Mittellinie des jeweiligen Zahnrades beziehungsweise der mit diesem verbunden Welle oder einem anderen mit diesem gekoppelten rotationssymmetrischen Bauteil zusammen.

Gemäß einer besonders vorteilhaften Ausbildung sind die Drehachsen zumindest der in der Hauptteilfuge angeordneten Zahnräder beziehungsweise der mit diesen verbundenen Wellen in einer einzigen Anordnungsebene angeordnet und die Hauptteilfuge eben ausgebildet. Dies erlaubt einfache Teilgehäusegeometrien und vermeidet Hinterschnitte, wie bei gestuften Teilfugen.

In einer alternativen Ausbildung sind die Drehachsen zumindest zweier in der Hauptteilfuge angeordneten Zahnräder beziehungsweise der mit diesen verbundenen Wellen in unterschiedlichen Anordnungsebenen angeordnet und die Hauptteilfuge gestuft ausgebildet. Die Geometrie und Dimensionierung, insbesondere die Stufenhöhen können unter Berücksichtigung der Größe der Zahnräder, insbesondere Großrades, des An- und der Abtriebszahnräder beziehungsweise der mit diesen verbundenen Wellen und/oder der Größe des teilbaren Gehäuses frei gewählt werden.

Ist die Drehachse des Großrades gegenüber der Anordnungsebene von Antriebszahnrad und erstem Abtriebszahnrad in vertikaler Richtung versetzt angeordnet, erlaubt die versetzte Anordnung durch die Verschiebung des Großrades in vertikaler Richtung einen Eingriff des Antriebszahnrades und eines Abtriebszahnrades in einem Außenumfangsbereich, der in Erstreckungsrichtung des Getriebes senkrecht zu den Drehachsen der einzelnen Zahnräder betrachtet durch eine geringere Breite als der Durchmesser des Großrades charakterisiert ist. Die Erstreckung des Getriebes in dieser Richtung wird dadurch erheblich verkürzt. Ferner bietet die versetze Anordnung des Großrades den Vorteil einer besseren Kompensation von Querkräften und damit Optimierung der Lastverteilung innerhalb des Getriebes, was sich in einer Erhöhung der Lebensdauer der Getriebekomponenten, insbesondere Lagerung niederschlägt.

Zur Gewährleistung einer Anwendung in einer Getriebeturbomaschine mit einer Mehrzahl von Abtriebsaggregaten, beispielsweise wenigstens zwei oder drei Verdichtern ist zumindest ein weiteres Abtriebszahnrad vorgesehen, welches mit dem Großrad in Eingriff steht, und dessen Drehachse gegenüber der Hauptteilfuge versetzt, insbesondere in vertikaler Richtung versetzt angeordnet ist. Das weitere Abtriebszahnrad ist gemäß einer ersten Ausbildung als Steckritzel in einer der Teilgehäuseeinheiten gelagert. Gemäß einer zweiten Ausbildung ist dieses in einer weiteren, zur Hauptteilfuge versetzt angeordneten Teilfuge des Gehäuses angeordnet.

Das Gehäuse kann als Guss- oder Schweißbauteil ausgebildet sein.

In Getriebeturbomaschinen wird vorzugsweise die erste Teilgehäuseeinheit von einem Getriebegehäuseunterteil gebildet und die zweite Teilgehäuseeinheit von einem oberhalb dessen, d.h. in vertikaler Richtung über dem Unterteil angeordneten oberen Getriebegehäuseteil, welches je nach Gehäusekonfiguration das Getriebegehäuseoberteil oder bei Vorsehen weiterer über diesem angeordneter Getriebegehäuseteile als Getriebegehäusemittelteil bezeichnet werden kann. Die Hauptteilfuge zwischen Getriebegehäuseunterteil und dem über dem Getriebegehäuseunterteil angeordneten oberen Getriebegehäuseteil - Getriebegehäuseoberteil oder Getriebegehäusemittelteil - verläuft in einer Horizontalebene oder bei Vorsehen von Stufensprüngen in mehreren Horizontalebenen. Dieses obere Getriebegehäuseteil ist in die zumindest drei oder auch mehr Gehäuseteile unterteilt, wobei das Mittelgehäuseteil im Bereich des Großrades angeordnet ist. Das Mittelgehäuseteil bleibt bei erforderlichem Zugang zu den in der Hauptteilfuge gelagerten An- und Abtriebswellen mit dem Getriebegehäuseunterteil verbunden und erhöht somit im Wesentlichen die Steifigkeit des Getriebes, insbesondere Gehäuses im teilweise demontierten Zustand.

Die einzelnen Teilfugen und/oder die Hauptteilfuge können verschiedenartig hinsichtlich ihrer Auslegung, der konstruktiven Ausbildung sowie Oberflächenbehandlung ausgeführt sein. Die Verbindungen zwischen den einzelnen Gehäusebestandteilen, welche über die Teilfugen und/oder die Hauptteilfuge realisiert werden, können ebenfalls unter Berücksichtigung der erforderlichen Zugängigkeit bei gewünschter Montage/Demontage frei gewählt werden. Dabei gelangen Verbindungen ausgewählt aus der nachfolgenden Gruppe von Verbindungen oder eine Kombination aus diesen zum Einsatz:
- kraftschlüssige Verbindung, insbesondere Befestigungselemente;
- formschlüssige Verbindung.

Wie bereits ausgeführt, ist das erfindungsgemäß ausgestaltete Getriebe in einer Getriebeturbomaschine zur Realisierung einer Wirkverbindung zwischen An- und/oder Abtriebsaggregaten durch Verbindung mit den einzelnen mit den An- und/oder Abtriebszahnrädern verbundenen Wellen zu einem Maschinenstrang integriert. Dabei kann das mit zumindest einer der an den An- und/oder Abtriebswellen verbundene An- und/oder Abtriebsaggregat von einem Laufrad einer Kompressorstufe und/oder einem Laufrad einer Expanderstufe gebildet werden.

Das mit dem Antriebszahnrad koppelbare Antriebsaggregat kann als eine Maschine ausgewählt aus der Gruppe nachfolgend genannter Maschinen ausgeführt sein:
- Turbokraftmaschine
- elektrische Antriebsmaschine
- Verbrennungskraftmaschine

Das erfindungsgemäß ausgebildete Getriebe ist einfach montierbar und demontierbar und ermöglicht die einfache Zugängigkeit zu den in der Hauptteilfuge gelagerten Zahnrädern unter Beibehaltung einer hohen Steifigkeit des Getriebegehäuses und bei evtl. zusätzlich außerhalb der Hauptteilfuge gelagerten Abtriebsaggregaten ohne erforderliche Demontage dieser. Das Verfahren zur Montage ist durch die Merkmale des Anspruchs 19, insbesondere nachfolgende Verfahrensschritte charakterisiert:
- Bereitstellen eines Gehäuses das zumindest zwei Teilgehäuseeinheiten - eine erste Teilgehäuseeinheit und eine zweite Teilgehäuseeinheit - umfasst, die über eine durch die Lagerbereiche der in diesem zu lagernden Zahnräder beziehungsweise der mit diesen verbundenen Wellen verlaufende Hauptteilfuge verbindbar sind, wobei eine der zu verbindenden Teilgehäuseeinheiten aus zumindest drei Gehäuseteilen - einem Mittelgehäuseteil und zwei Seitengehäuseteilen gebildet wird, wobei das Mittelgehäuseteil mit einem einzelnen Seitengehäuseteil jeweils über eine in einem Winkel zur Hauptteilfuge ausgerichtete Teilfuge verbindbar ist;
- Montage einer in Einbaulage unteren, vorzugsweise integral ausgebildeten ersten Teilgehäuseeinheit;
- Montage des Großrades und ggf. eines mit diesem in Eingriff stehenden Zahnrades in/an der ersten Teilgehäuseeinheit, vorzugsweise in der Hauptteilfuge der ersten Teilgehäuseeinheit;
- Montage des Mittelgehäuseteils unter zumindest teilweiser Umschließung des Großrades und Verbindung mit der ersten Teilgehäuseeinheit an der Hauptteilfuge;
- Montage der mit dem Großrad in Eingriff stehenden und in der Hauptteilfuge gelagerten Zahnräder mit Zahnradwelle und auf der Welle montierten drehbaren Bestandteil des Abtriebsaggregates;
- Montage der Seitengehäuseteile unter Ausbildung der zweiten Teilgehäuseeinheit durch Zusammenfügen mit dem Mittelgehäuseteil und der ersten Teilgehäuseeinheit.

Ist die Getriebeturbomaschine als Getriebeverdichter ausgebildet und die einzelnen Abtriebsaggregate als Verdichter ausgeführt, können die Laufräder der Verdichter mit den einzelnen Abtriebswellen montiert und nach Montage der Rückwand an das Gehäuse die Verdichtergehäuse an die Rückwand montiert werden. Die Rückwand kann als Baueinheit oder in Einzelteilen montiert werden, ferner kann die Montage der Laufräder mit Gasdichtungen und Rückwand in einem oder unterschiedlichen Verfahrensschritten erfolgen.

Wird über das Großrad eine weitere Verdichterstufe angetrieben, die außerhalb der Hauptteilfuge am Mittelgehäuseteil und einem weiteren dritten Teilgehäuse gelagert ist, erfolgt die Montage der weiteren Verdichterstufe nach Montage des zweiten Teilgehäuses, insbesondere Mittelgehäuseteils.

Die erfindungsgemäße Lösung wird nachfolgend anhand von Figuren erläutert. Darin ist im Einzelnen folgendes dargestellt:
- Figur 1a: zeigt in schematisiert vereinfachter Darstellung den Grundaufbau eines beispielhaft ausgeführten integrierten Getriebes in einer Ansicht von vorn in Einbaulage im montierten Zustand;
- Figur 1b: zeigt in schematisiert vereinfachter Darstellung das Getriebe gemäß Figur 1a bei Demontage der Seitengehäuseteile;
- Figur 2: zeigt beispielhaft eine Ausführung eines Getriebes gemäß Figur 1a mit versetzen Großrad;
- Figur 3: verdeutlicht die Integration eines erfindungsgemäß ausgebildeten Getriebes gemäß Figur 1a in einer Getriebeturbomaschine;
- Figuren 4a bis 4e: zeigen schematisiert vereinfacht mögliche Ausführungen von Getrieben;
- Figuren 5a bis 5c: zeigen beispielhaft mögliche Anwendung als Integralgetriebe in Getriebeturbomaschinen für Getriebeverdichteranlagen;
- Figur 6: verdeutlicht anhand eines Flussdiagrammes beispielhaft den Ablauf einzelner Verfahrensschritte bei der Montage einer Getriebeturbomaschine in Form eines Getriebeverdichters.

Für gleiche Elemente in den Figuren werden jeweils die gleichen Bezugszeichen verwendet.

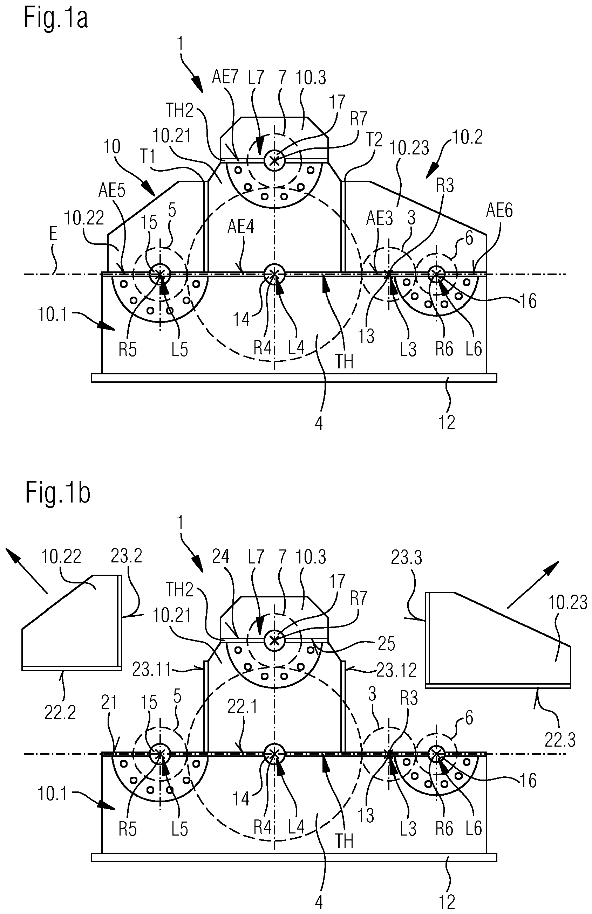

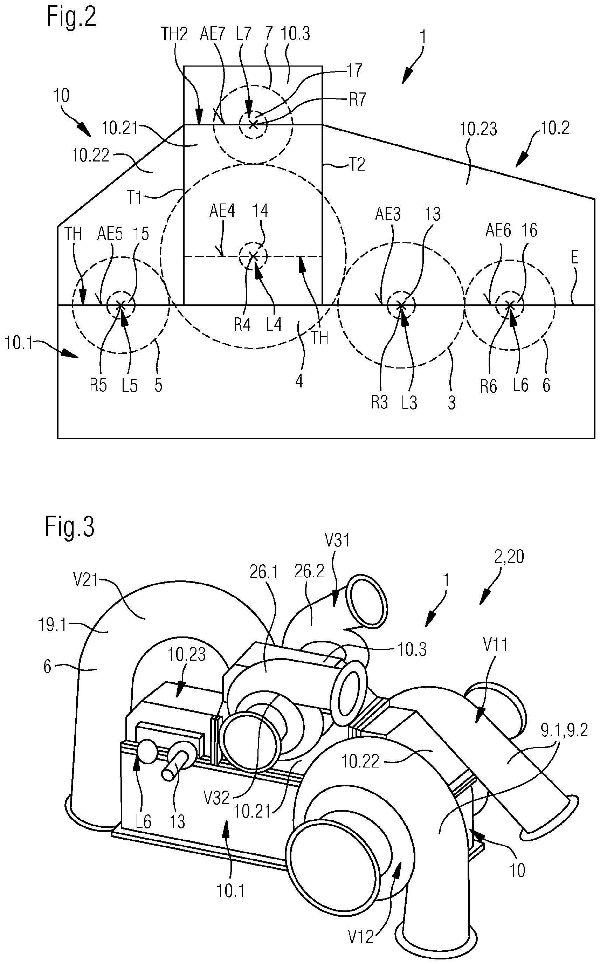

Die Figuren 1a und 1b zeigen in schematisiert stark vereinfachter Darstellung eine mögliche Ausführung eines Getriebes 1, insbesondere Integralgetriebes für eine Getriebeturbomaschine 2 eines Maschinenstranges, mit einem erfindungsgemäß ausgeführten Gehäuse 10. Eine Ausführung einer Getriebeturbomaschine 2 ist beispielhaft in Figur 3 wiedergegeben. Diese integriert über das Getriebe 1 An- und/oder Abtriebsaggregate zu einem Antriebsstrang. Als Antriebsaggregate können Dampfturbinen, Gasturbinen, Expander sowie Motoren und als Abtriebsaggregate Kompressoren sowie Generatoren zum Einsatz gelangen. Die einzelnen Aggregate sind miteinander gekoppelt und auf einem oder mehreren Grundrahmen, beispielsweise Maschinenfundamenten montiert. Figur 3 zeigt dabei beispielhaft eine Getriebeturbomaschine 2 in Form eines Getriebeverdichters 20 mit einem Getriebe 1 gemäß der Figuren 1a und 1b in einer Perspektivansicht.

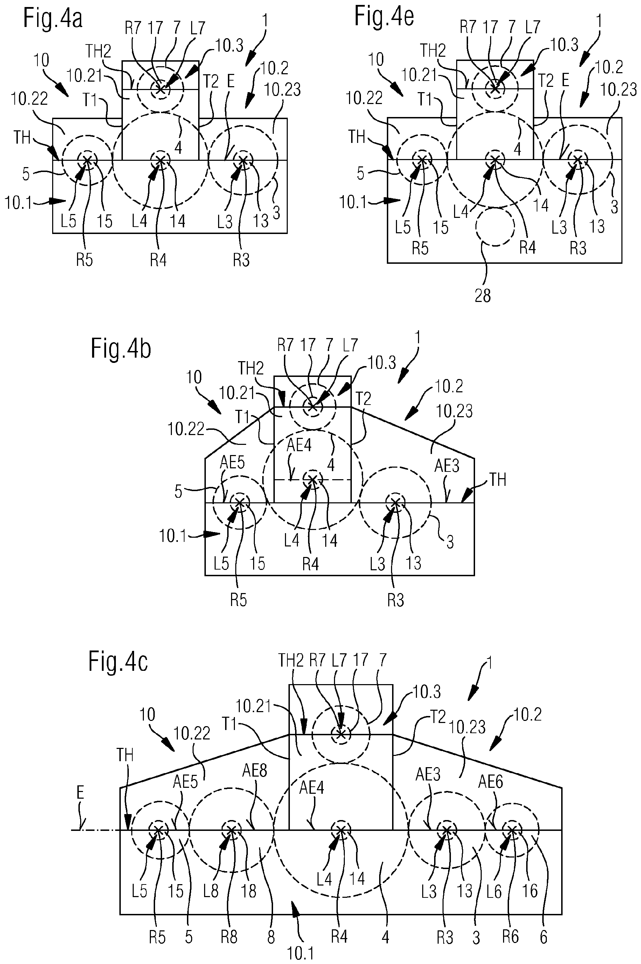

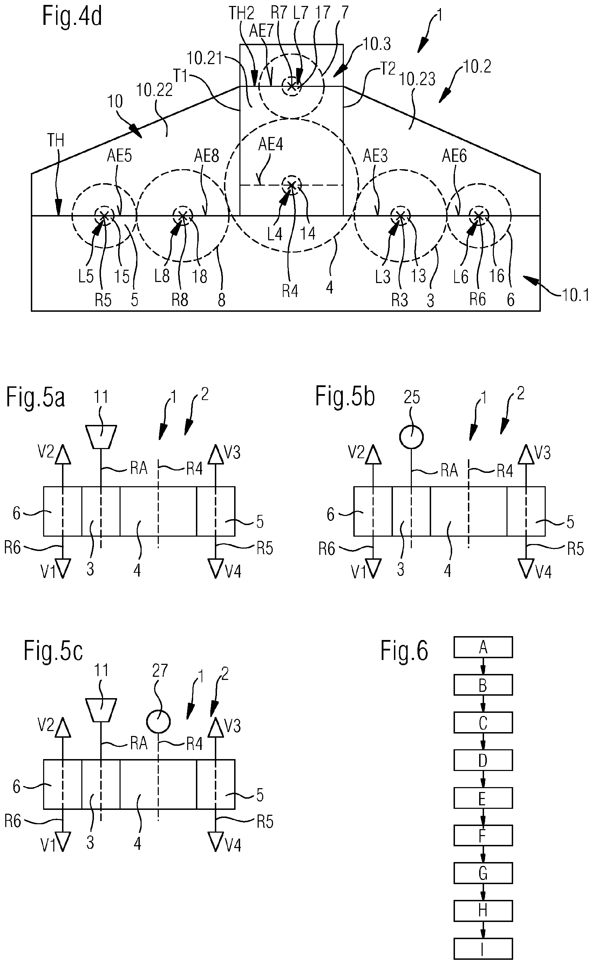

Das Getriebe 1 für eine Getriebeturbomaschine 2 umfasst ein mit einer Antriebswelle 13 integral ausgeführtes oder mit dieser verbundenes Antriebszahnrad 3. Das Getriebe 1 umfasst ferner ein mit dem Antriebszahnrad 3 in Eingriff stehendes Großrad 4 und zumindest ein, vorzugsweise eine Mehrzahl von weiteren Zahnrädern, die nachfolgend als Abtriebszahnräder 5, 6 und 7 bezeichnet werden. Aufgrund von deren Auslegung/Dimensionierung gegenüber dem Großrad 4 werden diese auch als Ritzel und die mit diesen verbundenen Wellen 15, 16, 17 als Ritzelwellen bezeichnet. Dabei steht zumindest ein Abtriebszahnrad, hier ein erstes Abtriebszahnrad 5 wenigstens mittelbar, d.h. direkt oder indirekt in einer Weiterbildung der Ausführung aus Figur 1a gemäß der Figuren 4c oder 4d unter Zwischenordnung eines Zwischenrades 8 mit dem Großrad 4 in Eingriff. Das in den Figuren 4c oder 4d dargestellte Zwischenrad 8 ist mit einer Zwischenradwelle 18 verbunden und der Lagerbereich ist mit L8 bezeichnet.

Die Ausbildung gemäß Figur 1a und 1b umfasst des Weiteren ein zweites Abtriebszahnrad 6, welches mit dem Antriebszahnrad 3 in Eingriff steht. Zusätzlich ist ein drittes Abtriebszahnrad 7 mit einer, dieses tragenden Welle 17 vorgesehen. Großrad 4, Antriebszahnrad 3, sowie die Abtriebszahnräder 5, 6, 7 beziehungsweise die jeweils mit diesen verbundenen Wellen 14, 13, 15, 16, 17 sind in einem Gehäuse 10 gelagert.

Die theoretischen Drehachsen R3 des Antriebszahnrades 3, R5 des mit dem Großrad 4 in Eingriff stehenden ersten Abtriebszahnrades 5, R4 des Großrades 4 sowie R6 des zweiten Abtriebszahnrades 6 sind jeweils in Anordnungsbereichen AE3, AE4, AE5, AE6 angeordnet. Diese können zueinander versetzt, beispielsweise in vertikaler Richtung zueinander versetzt angeordnet sein - wie beispielsweise für ein versetztes Großrad 4 in Figur 2 wiedergegeben - oder aber zumindest einzelne Anordnungsbereiche können in einer gemeinsamen Anordnungsebene E, wie in Figur 1a dargestellt, liegen. Die theoretischen Drehachsen entsprechen dabei den geometrischen Rotationsachsen der jeweiligen Zahnräder bzw. der mit diesen verbundenen Wellen.

Die Drehachse R7 eines weiteren dritten Abtriebszahnrades 7 ist in vertikaler Richtung versetzt zur Anordnungsebene E angeordnet. Die einzelnen Zahnräder - Antriebszahnrad 3, Großrad 4 sowie die weiteren Zahnräder 5, 6 und 7 sind in einem Gehäuse 10 angeordnet und in diesem in sogenannten Lagerbereichen L3, L4, L5, L6 und L7 gelagert. Das Gehäuse 10 ist dazu in wenigstens zwei Teilgehäuseeinheiten 10.1 und 10.2, hier drei Teilgehäuseeinheiten 10.1, 10.2 und 10.3 unterteilt, wobei die Hauptteilfuge TH zwischen den Teilgehäuseeinheiten 10.1, 10.2 durch die Lagerbereiche L3, L4, L5 und L6 verläuft. Die Teilfuge TH2, welche zwischen den Teilgehäuseeinheiten 10.2 und 10.3 verläuft, verläuft durch den Lagerbereich L7 des Abtriebszahnrades L7. Es versteht sich, dass bei beidseitiger Lagerung der Zahnräder bzw. der mit diesen verbundenen Wellen im Gehäuse 10 jeweils zwei derartige Lagerbereiche L3, L4, L5, L6 und L7 im Gehäuse 10 vorzusehen sind, die beidseitig des jeweiligen Zahnrades angeordnet sind.

Die Hauptteilfuge TH ist in der in Figur 1a dargestellten Ausführung vorzugsweise gerade, d.h. liegt in einer horizontalen Ebene E. Dies gilt in Analogie auch für die weitere Hauptteilfuge TH2 zwischen der zweiten und der dritten Teilgehäuseeinheit.

Das Getriebe 1 ist in Einbaulage wiedergegeben. Das Getriebe 1 kann in dieser Form auf einem Fundament 12 angeordnet sein. Es versteht sich, dass die Hauptteilfuge TH, deren Verlauf durch die Anordnung der Lagerbereiche L3, L4, L5, L6 der einzelnen Zahnräder - hier Großrad 4, Antriebszahnrad 3 und Abtriebszahnräder 5, 6 charakterisiert ist, nicht in einer einzigen Ebene E verlaufen muss, auch wenn die Drehachsen R3, R4, R5, R6 der einzelnen Zahnräder 3, 4, 5, 6 in dieser liegen. Abweichungen, insbesondere Stufungen in Form von Vorsprüngen oder Einbuchtungen bedingt durch weitere Zusatzbauteile sind ebenfalls möglich. Entscheidend ist, dass die Kontur und der Verlauf der Hauptteilfuge TH zumindest durch die Lagerbereiche der in dieser gelagerten Zahnräder, insbesondere L3, L4, L5 und L6 der Zahnräder bzw. der mit diesen verbundenen Wellen 13, 14, 15 und 16 verlaufend ausgeführt ist.

Die erste Teilgehäuseeinheit 10.1 bildet hier die in Einbaulage untere Teilgehäuseeinheit 10.1, die zweite Teilgehäuseeinheit 10.2 die in vertikaler Richtung darüber angeordnete Teilgehäuseeinheit 10.2. Bei Ausbildung des Gehäuses mit einer dritten Teilgehäuseeinheit 10.3 wird die zweite Teilgehäuseeinheit 10.2 auch als mittlere Teilgehäuseeinheit bezeichnet.

Erfindungsgemäß ist die zweite Teilgehäuseeinheit 10.2 mehrteilig ausgeführt, d.h. in zumindest drei Gehäuseteile unterteilt, wobei die Teilfugen T1 und T2 in einem Winkel im Bereich von 30° bis 150°, vorzugsweise 45° bis 135°, besonders bevorzugt in einem Winkel von 90° zur Hauptteilfuge TH verlaufend ausgebildet sind. Die zumindest drei Gehäuseteile werden von einem Mittelgehäuseteil 10.21 und jeweils mit diesem über die Teilfugen T1, T2 verbundenen Seitengehäuseteilen 10.22 und 10.23 gebildet. Die Verbindung von Mittelgehäuseteil 10.21 mit den Seitengehäuseteilen 10.22 und 10.23, welche beidseitig, d.h. an voneinander weggerichteten Seiten des Mittelgehäuseteils 10.21 angeordnet sind, erfolgt im Bereich der jeweiligen Teilfugen T1 und T2. Die Verbindung der Gehäuseteile Mittelgehäuseteil 10.21 und der Seitengehäuseteile 10.22 und 10.23 als Bestandteile der zweiten Teilgehäuseeinheit 10.2 mit der Teilgehäuseeinheit 10.1 erfolgt im Bereich der Hauptteilfuge TH. Dazu sind die einzelnen zueinander weisenden Gehäusebestandteile mit entsprechenden Fügebereichen 21 an der Hauptteilfuge TH und 22.1, 22.2 und 22.3 an den zur Hauptteilfuge TH in Einbaulage weisenden Seite von Mittelgehäuseteil 10.21 und Seitengehäuseteil 10.22 bzw. 10.23 der Teilgehäuseeinheit 10.2 ausgebildet. Die Fügebereiche an den Seitengehäuseteilen 10.22 und 10.23 zur Verbindung mit dem Mittelgehäuseteil 10.21 sind mit 23.2 und 23.3 bezeichnet. Die Fügebereiche am Mittelgehäuseteil 10.21 sind mit 23.11 und 23.12 bezeichnet. Die konstruktive Ausbildung der Fügebereiche erfolgt in Abhängigkeit der gewählten Verbindungseinrichtungen beim Fügen der einzelnen Gehäusebestandteile zum Gesamtgehäuse 10. Für diese besteht eine Vielzahl von Möglichkeiten, wobei vorzugsweise lösbare und kraftschlüssige Verbindungseinrichtungen gewählt werden. In diesem Fall sind die Gehäusebestandteile im Bereich von deren Hauptteilfugen TH und Teilfugen T1, T2, TH2 vorzugsweise mit Flanschflächen ausgebildet, die die Aufnahme und/oder Führung kraftschlüssiger Verbindungseinrichtungen, insbesondere von Befestigungselementen, wie z.B. Schrauben und Gewinde ermöglichen.

Die Teilgehäuseeinheit 10.3 ist mit dem Mittelgehäuseteil 10.21 über die Teilfuge TH2 verbunden. Die vorgenannten Aussagen zur konstruktiven Ausgestaltung und Dimensionierung von Teilfugen sind auf diese übertragbar. Die Teilgehäuseeinheit 10.3 ist vorzugsweise derart dimensioniert und ausgelegt, dass dieses sich im Wesentlichen über die Erstreckung des Mittelgehäuseteils 10.21 in Richtung quer zu den in diesen gelagerten Wellen erstreckt, wodurch die Demontage der Seitengehäuseteile 10.22, 10.23 unabhängig von der Teilgehäuseeinheit 10.3 und der in diesem gelagerten Wellen und der mit diesen verbundenen Abtriebsaggregate erfolgen kann.

Die Teilfugen T1 und T2 sind außerhalb der Lagerbereiche L3, L4, L5 und L6 angeordnet. Vorzugsweise erfolgt die Anordnung innerhalb der Erstreckung des in die Hauptteilfuge projizierten Kopfkreisdurchmessers des Großrades 4. Dadurch kann der Verbindungsbereich zwischen Mittelgehäuseteil 10.21 und der Teilgehäuseeinheit 10.1 möglichst groß gewählt werden, so dass das Gehäuseteil 10.1 über einen größeren Erstreckungsbereich durch die Verbindung der einander gegenüberliegenden Gehäusewände über das Mittelgehäuseteil versteift wird.

Die Figur 1a zeigt den montierten Zustand, während in Figur 1b die Demontage der Seitengehäuseteile 10.22 und 10.23 wiedergegeben ist. Erkennbar ist, dass die über die im Teilgehäuse 10.3 gelagerte Welle anbindbaren Abtriebsaggregate nicht demontiert werden müssen, um an die in der Hauptteilfuge außerhalb des Mittelgehäuseteils 10.21 gelagerten Wellen heranzukommen, da die Teilgehäuseeinheit 10.3 mit dem Mittelgehäuseteil 10.21 verbunden bleiben kann. Die Montage und Demontage wird somit erheblich vereinfacht.

Die Figur 2 zeigt beispielhaft in schematisiert stark vereinfachter Darstellung eine abgewandelte Ausführung eines Getriebes 1 gemäß Figur 1a mit einer Hauptteilfuge TH mit gegenüber den Drehachsen R5, R6 der Abtriebszahnräder 5, 6 versetzten Drehachse R4 des Großrades 4. Die Drehachsen R3 des Antriebszahnrades 3 und R5 des mit dem Großrad 4 in Eingriff stehenden ersten Abtriebszahnrades 5 und R6 des mit dem Antriebszahnrad 3 kämmenden weiteren zweiten Abtriebszahnrades 6 sind in einer gemeinsamen Anordnungsebene E angeordnet. Die Wellen 13, 15, 16 in einer gemeinsamen Hauptteilfuge TH gelagert; wobei die Anordnungsebenen AE3, AE5 und AE6 hier beispielhaft in Einbaulage in einer Horizontalebene E liegen. Zur besseren Lastverteilung und Realisierung einer kompakteren Bauweise in axialer Richtung ist die Drehachse R4 des Großrades 4 gegenüber der Anordnungsebene E von Antriebszahnrad 3 und erstem Abtriebszahnrad 5 in vertikaler Richtung versetzt angeordnet. Dabei ist die das Großrad 4 tragende Welle 14 oberhalb der Ebene E in einer Anordnungsebene AE4 angeordnet. Der Versatz bedingt eine Stufung der Anordnungsbereiche derart, dass der Winkel zwischen einer theoretisch gedachten Verbindungslinie zwischen Drehachse R3 der Antriebswelle A und der Drehachse R4 des Großrades 4 sowie der Drehachse R4 des Großrades und der Drehachse R5 des ersten Abtriebszahnrades 5 in einem Bereich von 130° bis 175°ausgeführt ist. Das Großrad 4 sowie die Zahnräder 3, 5, 6 sind schrägverzahnt. Durch die in vertikaler Richtung versetzte Anordnung des Großrades 4 ergibt sich eine optimale Lastverteilung

Der Lagerbereich L4 des Großrades 4 ist an der ersten Teilgehäuseeinheit 10.1, jedoch außerhalb der gegenüber der Umgebung dichtenden, insbesondere öldichtenden Hauptteilfuge des Gehäuses 10 angeordnet.

Figur 3 verdeutlicht in einer Perspektivansicht die Integration eines erfindungsgemäßen Getriebes 1 in einer Getriebeturbomaschine 2. Diese umfasst eine Mehrzahl von Verdichterstufen V11, V12, V21, V31, V32 die über wenigstens mittelbar mit einem Antriebszahnrad 3 oder einem Großrad 4 in Eingriff stehenden Abtriebszahnrädern 5, 6 und 7 angetrieben werden. Dazu sind auf die mit den Abtriebszahnrädern 5, 6, 7 verbundenen Wellen 15, 16, 17 Laufräder der Verdichterstufen V11, V12, V21, V31, V32 montiert, die von an einer Verdichterwand montierten Verdichtergehäusen 9.1, 9.2 sowie 19.1 und 26.1, 26.2 umschlossen werden. Das Getriebe 1 ist wie in Figur 1a ausgebildet. Erkennbar sind die einzelnen Teilgehäuseeinheiten 10.1, 10.2, die Bestandteile-Mittelgehäuseteil 10.21 sowie die Seitengehäuseteile 10.22, 10.23 des zweiten Teilgehäuses 10.2 und das mit dem Mittelgehäuseteil 10.21 verbundene Teilgehäuse 10.3.

Auch hier verlaufen die Teilfugen T1 und T2 zwischen Mittelgehäuseteil 10.21 und den Seitengehäuseteilen 10.22 und 10.23 in einer Ansicht des Getriebes 1 auf die Stirnseiten der miteinander in Eingriff stehenden Zahnräder betrachtet zwischen den Wellen von Großrad und den mit diesem in Eingriff stehenden und in der Hauptteilfuge gelagerten Zahnrädern.

Die Figuren 4a bis 4e zeigen beispielhaft weitere Getriebekonfigurationen, bei welchen die erfindungsgemäße Unterteilung einer Teilgehäuseeinheit in mehrere Gehäuseteile zum Zweck der teilweisen Demontage zum Einsatz gelangen kann. Figur 4a zeigt eine erste Konfiguration eines Getriebes 1 mit einem Großrad 4 und drei mit diesem in Eingriff stehenden Zahnrädern, beispielhaft einem Antriebszahnrad 3 und einem ersten Abtriebszahnrad 5 sowie einem Abtriebszahnrad 7. Denkbar wäre es auch das Großrad 4 als Antriebszahnrad zu verwenden und das Antriebszahnrad 3 von einem mit einer Abtriebswelle verbundenen Abtriebszahnrad zu bilden.

Die Drehachsen R3, R4 und R5 und damit die Lagerbereiche L3, L4, L5 der Zahnräder 3, 5 und 4 sind in einer gemeinsamen Ebene in der Hauptteilfuge TH angeordnet. Die Drehachse R7 ist versetzt zu dieser in einer Teilfuge TH2 angeordnet. Die Teilgehäuseeinheit 10.2 bildet ein Gehäuseoberteil und ist in die Gehäuseteile - Mittelgehäuseteil 10.21 sowie die Seitengehäuseteile 10.22 und 10.23 unterteilt. Die Teilfugen T1 und T2 verlaufen im Bereich des Kopfkreisdurchmessers des Großrades 4. Das Gehäuseoberteil wird über die Teilgehäuseeinheit 10.3 verschlossen. Die Ausführung entspricht im Wesentlichen der Konfiguration gemäß Figur 1a allerdings frei von einem zweiten Abtriebszahnrad 6.

Die Figur 4b zeigt die Konfiguration gemäß Figur 4a mit versetztem Großrad 4. Die Grundkonfiguration entspricht somit der in Figur 2 beschriebenen allerdings frei von einem zweiten Abtriebszahnrad 6

Die Figur 4c zeigt eine Weiterbildung einer Ausführung gemäß Figur 1a mit zusätzlichem Zwischenrad 8 zwischen Abtriebszahnrad 5 und Großrad 4 mit ebener Hauptteilfuge TH, während Figur 4d die Konfiguration gemäß Figuren 4c mit versetztem Großrad 4 wiedergibt.

Figur 4e zeigt beispielhaft eine Ausbildung gemäß Figur 4a mit zumindest einem weiteren außerhalb der Teilfuge TH gelagerten Abtriebszahnrad 28, welches als Steckritzel ausgebildet ist.

Die Figuren 5a bis 5d zeigen beispielhaft mögliche Anwendungen des Getriebes 1 in Getriebeturbomaschinen 2 und Ausführungen dieser. Figur 5a zeigt eine vorteilhafte Anwendung in einem Maschinenstrang einer Getriebeturbomaschine 2 in Form einer Getriebeverdichteranlage mit einer Antriebsmaschine, einem Getriebe 1 zum Antrieb zumindest eines oder mehrerer Verdichter V1 bis Vn, hier V1, V2, V3 und V4. Das Getriebe1 ist dabei wie in den Figuren 1 und 2 beschrieben ausgeführt. Die Antriebswelle 13 ist mit einem Antriebsaggregat AM verbunden. Die einzelnen mit den Abtriebszahnrädern 5 und 6 verbundenen Abtriebswellen 15 und 16 sind jeweils mit einem der Verdichter verbunden, insbesondere tragen ein Laufrad eines derartigen Verdichters V1 bis V4.

Die Antriebsmaschine gemäß Figur 5a ist als Turbine 11, insbesondere Dampfturbine ausgeführt. Demgegenüber zeigt Figur 5b eine Ausführung mit einer Antriebsmaschine in Form einer elektrischen Maschine 25.

Figur 5c zeigt eine Ausführung gemäß Figur 5a mit zusätzlicher elektrischer Maschine 27 am Großrad 4. Die elektrische Maschine 27 ist mit der Welle 14 des Großrades 4 gekoppelt.

Figur 6 verdeutlicht schematisiert beispielhaft anhand eines Ablaufplanes die Verfahrensschritte einer möglichen Montage einer Getriebeturbomaschine 2 in Form eines Getriebeverdichters 20. Im Verfahrensschritt A erfolgt die Bereitstellung eines Gehäuses 10, das zumindest zwei Teilgehäuseeinheiten - eine erste Teilgehäuseeinheit 10.1 und eine zweite Teilgehäuseeinheit 10.2 - umfasst, die über eine durch die Lagerbereiche der in diesem zu lagernden Zahnräder beziehungsweise der mit diesen verbundenen Wellen verlaufende Hauptteilfuge TH verbindbar sind, wobei eine der zu verbindenden Teilgehäuseeinheiten, insbesondere die in Einbaulage das obere Getriebegehäuseteil bildende Teilgehäuseeinheit 10.2 aus zumindest drei Gehäuseteilen - einem Mittelgehäuseteil 10.21 und zwei Seitengehäuseteilen 10.22, 10.23 besteht. In B erfolgt die Montage bzw. Positionierung einer in Einbaulage unteren, vorzugsweise integral ausgebildeten ersten Teilgehäuseeinheit 10.1, wobei in C das Großrad 4 und ggf. auch bereits ein mit diesem in Eingriff stehendes Zahnrad, beispielsweise das Antriebszahnrad 3 in der Hauptteilfuge TH der ersten Teilgehäuseeinheit 10.1 angeordnet werden. Im Anschluss daran wird das Mittelgehäuseteil 10.21 unter zumindest teilweiser Umschließung des Großrades 4 montiert und über die Hauptteilfuge mit der unteren Teilgehäuseeinheit 10.1 verbunden. In E erfolgt der Anbau eines Unterteils der Rückwand eines Abtriebsaggregates an die Teilgehäuseeinheit 10.1, insbesondere eines Unterteils der Verdichterrückwand. F ist durch die Montage zumindest eines, vorzugsweise der weiteren in der Hauptteilfuge gelagerten Abtriebszahnräder 5 und 6 mit den Zahnradwellen und auf den jeweiligen Wellen montierten drehbaren Bestandteilen der Abtriebsaggregate, insbesondere der Laufräder der Verdichter V11, V12 und V21 charakterisiert. Danach erfolgt in G der Anbau eines Oberteils der Verdichterrückwand der einzelnen Verdichter an die Teilgehäuseeinheit 10.1. An die Rückwand werden in H die jeweiligen Verdichtergehäuse montiert und in I die Seitengehäuseteile 10.22, 10.23 unter Verbindung mit dem Mittelgehäuseteil 10.21 und dem ersten Teilgehäuse 10.1 und unter Umschließung der Zahnräder 3, 5 und 6 montiert. Ist mit dem Großrad 4 zumindest eine weitere Verdichterstufe, wie in Figur 2 die Verdichterstufen V31 und V32 gekoppelt, wird diese über ein in einer am Mittelgehäuseteil 10.21 vorgesehenen Teilfuge TH2 angeordneten Abtriebswelle 17 verbundenes Abtriebszahnrad 7, welches mit dem Großrad 4 in Eingriff steht, angetrieben. Die Montage erfolgt nach Verfahrensschritt I.

Werden die Abtriebszahnräder, insbesondere Ritzelwellen mit den Laufrädern montiert eingebaut, erfolgt der Einbau einer Gasdichtung bei geteilter Rückwand vor dem Einbau des oberen Teils der Rückwand. Andernfalls werden Rückwand und Gasdichtung in einem Schritt montiert.

Die erfindungsgemäße Unterteilung des Getriebegehäuses ist nicht auf die in den Figuren dargestellten Ausführungen und wiedergegeben Getriebekonfigurationen für den Einsatz in Getriebeturbomaschinen beschränkt. Entscheidend ist bei einer Ausführung mit einem Großrad in Eingriff stehender Zahnräder, dass die Teilgehäuseeinheitenausführung derart erfolgt, dass lediglich die nicht das Großrad aufnehmenden Gehäuseteile bei Wartung- und Montage vollständig entfernt werden müssen, sondern mit den anderen Teilgehäuseeinheiten verbunden bleiben können.

### Bezugszeichenliste:

- 1: Getriebe, insbesondere Integralgetriebe
- 2: Getriebeturbomaschine, insbesondere Getriebeverdichter oder Expansionsmaschine
- 3: Antriebszahnrad
- 4: Großrad
- 5: Abtriebszahnrad
- 6: Abtriebszahnrad
- 7: Abtriebszahnrad
- 8: Zwischenrad
- 9.1: Verdichtergehäuse
- 10: Gehäuse
- 10.1, 10.2, 10.3: Teilgehäuse
- 10.21: Mittelgehäuseteil
- 10.22, 10.23: Seitengehäuseteil
- 11: Turbine
- 12: Fundament
- 13: Antriebswelle
- 14: Großradwelle
- 15: Abtriebswelle
- 16: Abtriebswelle
- 17: Abtriebswelle
- 18: Zwischenradwelle
- 19.1, 19.2: Verdichtergehäuse
- 20: Getriebeverdichter
- 21: Fügebereich
- 22.1, 22.2, 22.3: Fügebereich
- 23.11, 23.12, 23.2, 23.3: Fügebereich
- 24: Antriebsmaschine
- 25: elektrische Maschine
- 26.1, 26.2: Verdichtergehäuse
- 27: elektrische Maschine
- 28: Abtriebszahnrad, insbesondere Steckritzel
- V1, V2, V3, V4: Verdichter
- V11, V12, V21, V31, V32: Verdichter
- R3, R4, R5, R6, R7, R8: Drehachse
- TH: Hauptteilfuge
- T1, T2, TH2: Teilfuge
- AE3, AE4, AE5, AE6, AE7: Anordnungsebene
- E: Ebene
- A-I: Verfahrensschritte

## Patentansprüche

1. Getriebe (1), insbesondere Integralgetriebe für eine Getriebeturbomaschine, mit einem Großrad (4) und zumindest zwei mit dem Großrad (4) wenigstens mittelbar in Eingriff stehenden Zahnrädern (3, 5, 6, 8), die jeweils mit einer mit einem An- und/oder Abtriebsaggregat verbindbaren Welle verbunden oder integral ausgeführt sind;
mit einem Gehäuse (10), in welchem die Zahnräder beziehungsweise die mit diesen verbundenen Wellen (13, 15, 16, 18) gelagert sind;
das Gehäuse (10) weist dabei zumindest zwei Teilgehäuseeinheiten (10.1, 10.2) auf:
eine erste in Einbaulage untere Teilgehäuseeinheit (10.1) und eine zweite in Einbaulage vertikal dazu versetzt angeordnete obere Teilgehäuseeinheit (10.2), die über eine durch den Lagerbereich (L3, L5, L6, L8) zumindest eines mit dem Großrad (4) wenigstens mittelbar in Eingriff stehenden Zahnrades (3, 5, 6, 8) beziehungsweise der mit diesem verbundenen Welle verlaufende Hauptteilfuge (TH) verbindbar sind;
**dadurch gekennzeichnet,**
**dass** die zweite Teilgehäuseeinheit (10.1, 10.2) aus zumindest drei Gehäuseteilen gebildet ist: einem Mittelgehäuseteil (10.21), welches zumindest einen Teil des Großrades (4) aufnimmt und zwei mit dem Mittelgehäuseteil (10, 21) verbundenen Seitengehäuseteilen (10.22, 10.23) , wobei das Mittelgehäuseteil mit einem einzelnen Seitengehäuseteil (10.23) jeweils über eine in einem Winkel zur Hauptteilfuge (TH) ausgerichtete Teilfuge (T1, T2) verbunden ist.

2. Getriebe (1) nach Anspruch 1,
**dadurch gekennzeichnet,**
**dass** zumindest ein oder mehrere in der Hauptteilfuge (TH) gelagerte und wenigstens mittelbar mit dem Großrad (4) in Eingriff stehende Zahnräder (3, 5, 6, 8) von einem der Seitengehäuseteile (10.22, 10.23) zumindest teilweise aufgenommen sind.

3. Getriebe (1) nach Anspruch 1 oder 2,
**dadurch gekennzeichnet,**
**dass** das Großrad (4) bzw. die mit diesem verbundene oder integral ausgebildete Großradwelle (14) gemäß einer Lagermöglichkeit aus der nachfolgenden Gruppe von Lagermöglichkeiten gelagert ist:
- in der Hauptteilfuge zwischen der ersten Teilgehäuseeinheit und dem Mittelgehäuseteil der zweiten Teilgehäuseeinheit
- in der ersten Teilgehäuseeinheit
- in dem Mittelgehäuseteil.

4. Getriebe (1) nach einem der Ansprüche 1 bis 3,
**dadurch gekennzeichnet,**
**dass** zumindest ein mit dem Großrad (4) wenigstens mittelbar in Eingriff stehendes Zahnrad von einem mit einer Abtriebswelle (15, 16) verbindbaren oder integral ausgeführten ersten Abtriebszahnrad (5) gebildet wird und das Getriebe (1) zumindest noch ein oder mehrere weitere Zahnräder umfasst, ausgewählt aus der nachfolgenden Gruppe von Zahnrädern, welche jeweils wenigstens mittelbar mit dem Großrad (4) in Eingriff stehen:
- ein weiteres zweites Abtriebszahnrad (6)
- ein zwischen einem Abtriebszahnrad (5, 6) und dem Großrad (4) angeordnetes Zwischenrad (8) mit Zwischenradwelle (18);
- ein Antriebszahnrad (3) mit Antriebswelle (13);
wobei die Hauptteilfuge (TH) durch die Lagerbereiche (L3, 4, 5, 6, 8) wenigstens zwei der Zahnräder (3, 4, 5, 6, 8), vorzugsweise zumindest der Lagerbereiche (L5, L6) jeweils eines einzelnen Abtriebszahnrades (5, 6), besonders bevorzugt der Lagerbereiche eines einzelnen Abtriebszahnrades (5, 6) und des Antriebszahnrades (3), ganz besonders bevorzugt der Lagerbereiche eines einzelnen Abtriebszahnrades (5, 6), des Antriebszahnrades (3) und des Zwischenrades (8) verläuft.

5. Getriebe (1) nach einem der Ansprüche 1 bis 4,
**dadurch gekennzeichnet,**
**dass** das Großrad (4) als ein Antriebszahnrad mit einer mit einem Antriebsaggregat verbindbaren Großradwelle (14) ausgebildet ist und die mit dem Großrad (4) in Eingriff stehenden Zahnräder (5, 6, 8) von jeweils drehfest mit einer Abtriebswelle (15, 16) verbundenen Abtriebszahnrädern (5, 6) oder mit einem Abtriebszahnrad (6) in Eingriff stehenden Zahnrädern in Form von Zwischenrädern (8) gebildet werden, wobei die zumindest zwei Teilgehäuseeinheiten (10.1, 10.2) über eine durch die Lagerbereiche (L3, L5, L6, L8) zumindest eines der Abtriebszahnräder (5, 6) und/oder eines Zwischenrades (8) beziehungsweise der jeweils mit diesen verbundenen Wellen verlaufende Hauptteilfuge (TH) verbindbar sind.

6. Getriebe (1) nach einem der Ansprüche 1 bis 4,
**dadurch gekennzeichnet,**
**dass** die mit einem Großrad (4) in Eingriff stehenden Zahnräder von einem drehfest mit einer Antriebswelle (A) verbindbaren Antriebszahnrad (3) und einem mit dem Großrad (4) in Eingriff stehenden ersten Abtriebszahnrad (5) mit Abtriebswelle oder einem Zwischenrad (8) gebildet werden, wobei die zumindest zwei Teilgehäuseeinheiten (10.1, 10.2) über eine durch die Lagerbereiche (L3, L5, L6) zumindest eines der Abtriebszahnräder (5, 6), des Antriebszahnrades (3) und/oder Zwischenrades (8) beziehungsweise der mit diesen verbundenen Wellen verlaufende Hauptteilfuge (TH) verbindbar sind.

7. Getriebe (1) nach einem der Ansprüche 1 bis 6,
**dadurch gekennzeichnet,**
**dass** die Hauptteilfuge (TH) durch den Lagerbereich (L4) des Großrades (4) bzw. der mit diesem verbundenen Großradwelle (14) verlaufend ausgebildet ist.

8. Getriebe (1) nach einem der vorgenannten Ansprüche,
**dadurch gekennzeichnet,**
**dass** die einzelne, zwischen Mittelgehäuseteil (10.21) und einem Seitengehäuseteil (10.22, 10.23) der zweiten Teilgehäuseeinheit (10.2) vorgesehene Teilfuge (T1, T2) in einem Winkel im Bereich von 39° bis 150°, vorzugsweise 45° bis 135°, besonders bevorzugt 90° zur Hauptteilfuge verlaufend ausgebildet ist.

9. Getriebe (1) nach einem der vorgenannten Ansprüche,
**dadurch gekennzeichnet,**
**dass** die einzelne, zwischen Mittelgehäuseteil (10.21) und einem Seitengehäuseteil (10.22, 10.23) der zweiten Teilgehäuseeinheit (10.2) vorgesehene Teilfuge (T1, T2) außerhalb des Lagerbereiches (L3, L4, L5, L6, L8) eines einzelnen in der Hauptteilfuge (TH) gelagerten Zahnrades (3, 4, 5, 6, 8) angeordnet ist.

10. Getriebe (1) nach Anspruch 9,
**dadurch gekennzeichnet,**
**dass** die einzelne, zwischen Mittelgehäuseteil (10.21) und einem Seitengehäuseteil (10.22, 10.23) der zweiten Teilgehäuseeinheit (10.2) vorgesehene Teilfuge (T1, T2) außerhalb des Lagerbereiches (L4) des Großrades (4) bzw. der mit diesem verbundenen Großradwelle (14) und innerhalb eines Erstreckungsbereiches ausgehend von der Drehachse des Großrades (4) entlang der Hauptteilfuge betrachtet angeordnet ist, welcher dem Erstreckungsbereich des Kopfkreisdurchmessers des Großrades (4) entspricht.

11. Getriebe (1) nach einem der vorgenannten Ansprüche,
**dadurch gekennzeichnet,**
**dass** die Hauptteilfuge (TH) in einer Ebene verlaufend oder gestuft ausgebildet ist.

12. Getriebe (1) nach einem der vorgenannten Ansprüche,
**dadurch gekennzeichnet,**
**dass** die Drehachsen (R3, R4, R5, R6, R8) zumindest zweier der in der Hauptteilfuge (TH) gelagerter Zahnräder (3, 4, 5, 6, 8) beziehungsweise der mit diesen verbundenen Wellen in einer gemeinsamen oder unterschiedlichen Anordnungsebenen (AE3, AE4, AE5, AE6, AE8) angeordnet sind.

13. Getriebe (1) nach einem der vorgenannten Ansprüche,
**dadurch gekennzeichnet,**
**dass** zumindest ein Zahnrad (28) vorgesehen ist, welches mit einer mit einem An- oder Abtriebsaggregat verbindbaren Welle verbunden oder integral ausgeführt ist und mit dem Großrad (4) wenigstens mittelbar in Eingriff steht sowie außerhalb der Hauptteilfuge (TH) in einer Teilgehäuseeinheit (10.1) gelagert ist, wobei das Zahnrad mit Welle als Steckritzel ausgebildet ist.

14. Getriebe (1) nach einem der vorgenannten Ansprüche,
**dadurch gekennzeichnet,**
**dass** zumindest ein mit einer, mit einem An- oder Abtriebsaggregat verbindbaren Welle verbundenes oder integral ausgeführtes Zahnrad (7) vorgesehen ist, welches mit dem Großrad (4) in Eingriff steht, und das von einer dritten, über eine weitere Teilfuge (TH2) mit dem Mittelgehäuseteil (10.21) verbundenen Teilgehäuseeinheit (10.3) aufgenommen ist.

15. Getriebe (1) nach Anspruch 14,
**dadurch gekennzeichnet,**
**dass** die erste Teilgehäuseeinheit (10.1) von einem Getriebegehäuseunterteil gebildet wird und die zweite Teilgehäuseeinheit (10.2) von einem oberen Getriebegehäuseteil gebildet wird und dass die dritte Teilgehäuseeinheit (10.3) von einem weiteren, das obere Getriebegehäuseteil abschließenden Getriebegehäusedeckel oder einer, zumindest ein Zahnrad wenigstens teilweise aufnehmenden Teilgehäuseeinheit gebildet wird.

16. Getriebe (1) nach einem der vorgenannten Ansprüche,
**dadurch gekennzeichnet,**
**dass**
- die Seitengehäuseteile (10.22, 10.23) mit dem Mittelgehäuseteil (10.21) und/oder
- die Seitengehäuseteile (10.22, 10.23) und das Mittelgehäuseteil (10.21) mit der ersten Teilgehäuseeinheit (10.1) und/oder
- die einzelnen Teilgehäuseeinheiten (10.1, 10.2, 10.3) über zumindest eine Verbindung ausgewählt aus der nachfolgenden Gruppe von Verbindungen oder eine Kombination aus diesen verbunden sind:
- kraftschlüssige Verbindung, insbesondere Befestigungselemente;
- formschlüssige Verbindung.

17. Getriebeturbomaschine (2), welche über ein Getriebe gemäß einem der Ansprüche 1 bis 16 An- und/oder Abtriebsaggregate (V11, V12, V21, V31, V32) durch Verbindung mit den einzelnen mit den An- und/oder Abtriebszahnrädern (3, 5, 6, 7) verbundenen Wellen (13, 15, 16, 17) zu einem Maschinenstrang integriert.

18. Getriebeturbomaschine (2) nach Anspruch 17,
**dadurch gekennzeichnet:**
**dass** das mit zumindest einer der an den An- und/oder Abtriebswellen verbundene An- und/oder Abtriebsaggregat (V11, V12, V21, V31, V32; V1, V2, V3, V4) ein Element aus der Gruppe nachfolgend genannter Elemente ist:
- ein Laufrad einer Kompressorstufe
- ein Laufrad einer Expanderstufe.

19. Getriebeturbomaschine (2) nach einem der Ansprüche 17 bis 18,
**dadurch gekennzeichnet:**
**dass** das mit dem Antriebszahnrad (3) koppelbare Antriebsaggregat eine Maschine ausgewählt aus der Gruppe nachfolgend genannter Maschinen ist:
- Turbokraftmaschine
- Turbine (11)
- elektrische Antriebsmaschine (25)
- Verbrennungskraftmaschine

20. Verfahren zur Montage einer Getriebeturbomaschine (2) nach einem der Ansprüche 17 bis 19 mit den folgenden Verfahrensschritten:
a) Bereitstellen eines Gehäuses das zumindest zwei Teilgehäuseeinheiten, eine erste Teilgehäuseeinheit und eine zweite Teilgehäuseeinheit, umfasst, die über eine durch die Lagerbereiche der in diesem zu lagernden Zahnräder beziehungsweise der mit diesen verbundenen Wellen verlaufende Hauptteilfuge (TH) verbindbar sind, wobei eine der zu verbindenden Teilgehäuseeinheiten (10.1, 10.2) aus zumindest drei Gehäuseteilen : einem Mittelgehäuseteil (10.21) und zwei Seitengehäuseteilen (10.22, 10.23) gebildet wird, wobei das Mittelgehäuseteil (10.21) mit einem einzelnen Seitengehäuseteil (10.23) jeweils über eine in einem Winkel zur Hauptteilfuge (TH) ausgerichtete Teilfuge (T1, T2) verbindbar ist;
b) Montage und/oder Positionierung einer in Einbaulage unteren, vorzugsweise integral ausgebildeten ersten Teilgehäuseeinheit (10.1);
c) Montage des Großrades (4) und ggf. eines mit diesem in Eingriff stehenden Zahnrades in/an der ersten Teilgehäuseeinheit (10.1), vorzugsweise in der Hauptteilfuge der ersten Teilgehäuseeinheit (10.1);
d) Montage des Mittelgehäuseteils (10.21) unter zumindest teilweiser Umschließung des Großrades (4) und Verbindung mit der ersten Teilgehäuseeinheit (10.1) an der Hauptteilfuge (TH);
e) Montage der oder ggf. der weiteren mit dem Großrades (4) in Eingriff stehenden und in der Hauptteilfuge (TH) gelagerten Zahnräder (3, 5, 6, 8);
f) Montage der Seitengehäuseteile (10.22, 10.23) unter Verbindung mit dem Mittelgehäuseteil (10.21) und der ersten Teilgehäuseeinheit (10.1) unter Ausbildung einer mit der ersten Teilgehäuseeinheit (10.1) verbundenen zweiten Teilgehäuseeinheit (10.2).

21. Verfahren zur Montage einer Getriebeturbomaschine (2) nach Anspruch 20,
**dadurch gekennzeichnet, dass** die Getriebeturbomaschine (2) als Getriebeverdichter ausgebildet ist und die einzelnen Abtriebsaggregate als Verdichter ausgeführt sind, wobei die Laufräder der Verdichter mit den einzelnen Abtriebswellen montiert werden und nach Montage einer Rückwand an die erste Teilgehäuseeinheit (10.1) die Verdichtergehäuse an diese montiert werden.

22. Verfahren zur Montage einer Getriebeturbomaschine (2) nach Anspruch 21,
**dadurch gekennzeichnet, dass** mit dem Großrad (4) eine weitere Verdichterstufe, die im Mittelgehäuseteil (10.21) und in einem dritten Teilgehäuse (10.3) gelagert ist, angetrieben wird, wobei die weitere Verdichterstufe nach Montage der zweiten Teilgehäuseeinheit (10.2) erfolgt.

## Claims

1. Transmission (1), in particular an integral transmission for a transmission turbomachine,
having a large wheel (4) and at least two gearwheels (3, 5, 6, 8), which are in mesh at least indirectly with the large wheel (4) and which are each connected to or formed integrally with a shaft that can be connected to an input and/or output unit;
having a housing (10), in which the gearwheels or the shafts (13, 15, 16, 18) connected thereto are supported;
the housing (10) here has at least two partial housing units (10.1, 10.2): a first partial housing unit (10.1), which is at the bottom in the installation position, and a second, upper partial housing unit (10.2), which is arranged offset vertically with respect to the first in the installation position, which partial housing units can be connected by means of a main joint (TH) that extends through the support region (L3, L5, L6, L8) of at least one gearwheel (3, 5, 6, 8) in mesh at least indirectly with the large wheel (4) or of the shaft connected to said gearwheel;
**characterized**
**in that** the second partial housing unit (10.1, 10.2) is formed from at least three housing parts: a central housing part (10.21), which accommodates at least part of the large wheel (4), and two side housing parts (10.22, 10.23), which are connected to the central housing part (10.21), wherein the central housing part is in each case connected to an individual side housing part (10.23) by means of a joint (T1, T2) aligned at an angle to the main joint (TH).

2. Transmission (1) according to Claim 1,
**characterized**
**in that** at least one or more gearwheels (3, 5, 6, 8) supported in the main joint (TH) and in mesh at least indirectly with the large wheel (4) is/are at least partially accommodated by one of the side housing parts (10.22, 10.23).

3. Transmission (1) according to Claim 1 or 2,
**characterized**
**in that** the large wheel (4) or large-wheel shaft (14) connected to said large wheel or formed integrally therewith is supported according to one possibility of support from the following group of possibilities of support:
- in the main joint between the first partial housing unit and the central housing part of the second partial housing unit
- in the first partial housing unit
- in the central housing part.

4. Transmission (1) according to one of Claims 1 to 3,
**characterized**
**in that** at least one gearwheel in mesh at least indirectly with the large wheel (4) is formed by a first output gearwheel (5) that can be connected to an output shaft (15, 16) or is formed integrally therewith, and the transmission (1) furthermore comprises at least one or more further gearwheels, selected from the following group of gearwheels, which are each in mesh at least indirectly with the large wheel (4) :
- a further, second output gearwheel (6)
- an intermediate wheel (8) having an intermediate wheel shaft (18), said intermediate wheel being arranged between an output gearwheel (5, 6) and the large wheel (4);
- an input gearwheel (3) having an input shaft (13);
wherein the main joint (TH) extends through the support regions (L3, 4, 5, 6, 8) of at least two of the gearwheels (3, 4, 5, 6, 8), preferably at least the support regions (L5, L6) of in each case one individual output gearwheel (5, 6),
particularly preferably the support regions of an individual output gearwheel (5, 6) and of the input gearwheel (3), very particularly preferably the support regions of an individual output gearwheel (5, 6), of the input gearwheel (3) and of the intermediate wheel (8) .

5. Transmission (1) according to one of Claims 1 to 4,
**characterized**
**in that** the large wheel (4) is designed as an input gearwheel having a large-wheel shaft (14) that can be connected to an input unit, and the gearwheels (5, 6, 8) in mesh with the large wheel (4) are formed by output gearwheels (5, 6) connected for conjoint rotation to respective output shafts (15, 16) or by gearwheels in the form of intermediate wheels (8) in mesh with an output gearwheel (6), wherein the at least two partial housing units (10.1, 10.2) can be connected by means of a main joint (TH) extending through the support regions (L3, L5, L6, L8) of at least one of the output gearwheels (5, 6) and/or of an intermediate wheel (8) or of the respective shafts connected thereto.

6. Transmission (1) according to one of Claims 1 to 4,
**characterized**
**in that** the gearwheels in mesh with a large wheel (4) are formed by an input gearwheel (3) that can be connected for conjoint rotation to an input shaft (A) and by a first output gearwheel (5) in mesh with the large wheel (4), together with an output shaft or an intermediate wheel (8), wherein the at least two partial housing units (10.1, 10.2) can be connected by means of a main joint (TH) extending through the support regions (L3, L5, L6) of at least one of the output gearwheels (5, 6), of the input gearwheel (3) and/or of the intermediate wheel (8) or of the shafts connected thereto.

7. Transmission (1) according to one of Claims 1 to 6,
**characterized**
**in that** the main joint (TH) is designed to extend through the support region (L4) of the large wheel (4) or of the large-wheel shaft (14) connected to said large wheel.

8. Transmission (1) according to one of the preceding claims,
**characterized**
**in that** the individual joint (T1, T2) provided between the central housing part (10.21) and a side housing part (10.22, 10.23) of the second partial housing unit (10.2) is designed to extend at an angle in a range of from 39° to 150°, preferably 45° to 135°, particularly preferably 90°, to the main joint.

9. Transmission (1) according to one of the preceding claims,
**characterized**
**in that** the individual joint (T1, T2) provided between the central housing part (10.21) and a side housing part (10.22, 10.23) of the second partial housing unit (10.2) is arranged outside the support region (L3, L4, L5, L6, L8) of an individual gearwheel (3, 4, 5, 6, 8) supported in the main joint (TH).

10. Transmission (1) according to Claim 9,
**characterized**
**in that** the individual joint (T1, T2) provided between the central housing part (10.21) and a side housing part (10.22, 10.23) of the second partial housing unit (10.2) is arranged outside the support region (L4) of the large wheel (4) or of the large-wheel shaft (14) connected to said large wheel and within a region of extent, starting from the axis of rotation of the large wheel (4), when viewed along the main joint, which corresponds to the region of extent of the tip diameter of the large wheel (4).

11. Transmission (1) according to one of the preceding claims,
**characterized**
**in that** the main joint (TH) is designed to extend in one plane or in a stepped manner.

12. Transmission (1) according to one of the preceding claims,
**characterized**
**in that** the axes of rotation (R3, R4, R5, R6, R8) of at least two of the gearwheels (3, 4, 5, 6, 8) supported in the main joint (TH) or of the shafts connected thereto are arranged in a common plane of arrangement or in different planes of arrangement (AE3, AE4, AE5, AE6, AE8).

13. Transmission (1) according to one of the preceding claims,
**characterized**
**in that** at least one gearwheel (28), which is connected to a shaft that can be connected to an input or an output unit or is embodied integrally with said shaft and is in mesh at least indirectly with the large wheel (4) as well as being supported outside the main joint (TH) in a partial housing unit (10.1), is provided, wherein the gearwheel with the shaft is designed as a stub shaft pinion.

14. Transmission (1) according to one of the preceding claims,
**characterized**
**in that** at least one gearwheel (7), which is connected to a shaft that can be connected to an input or an output unit or is embodied integrally with said shaft, which is in mesh with the large wheel (4) and which is accommodated by a third partial housing unit (10.3) connected by means of a further joint (TH2) to the central housing part (10.21), is provided.

15. Transmission (1) according to Claim 14,
**characterized**
**in that** the first partial housing unit (10.1) is formed by a transmission housing bottom part and the second partial housing unit (10.2) is formed by an upper transmission housing part, and in that the third partial housing unit (10.3) is formed by an additional transmission housing cover closing off the upper transmission housing part or by a partial housing unit which at least partially accommodates at least one gearwheel.

16. Transmission (1) according to one of the preceding claims,
**characterized**
**in that**
- the side housing parts (10.22, 10.23) are connected to the central housing part (10.21) and/or
- the side housing parts (10.22, 10.23) and the central housing part (10.21) are connected to the first partial housing unit (10.1) and/or
- the individual partial housing units (10.1, 10.2, 10.3) are connected
by means of at least one connection selected from the following group of connections or a combination thereof:
- nonpositive connection, in particular fastening elements;
- positive connection.

17. Transmission turbomachine (2), which integrates input and/or output units (V11, V12, V21, V31, V32) into a machine drive train via a transmission according to one of Claims 1 to 16 by connection to the individual shafts (13, 15, 16, 17) connected to the input and/or output gearwheels (3, 5, 6, 7).

18. Transmission turbomachine (2) according to Claim 17,
**characterized:**
**in that** the input and/or output unit (V11, V12, V21, V31, V32; V1, V2, V3, V4) connected to at least one of the input and/or output shafts is an element from the group of elements mentioned below:
- a rotor of a compressor stage
- a rotor of an expander stage.

19. Transmission turbomachine (2) according to one of Claims 17 to 18,
**characterized:**
**in that** the input unit that can be coupled to the input gearwheel (3) is a machine selected from the group comprising the machines mentioned below:
- turbo engine
- turbine (11)
- electric drive motor (25)
- internal combustion engine

20. Method for assembling a transmission turbomachine (2) according to one of Claims 17 to 19, having the following method steps:
a) providing a housing which comprises at least two partial housing units, a first partial housing unit and a second partial housing unit, which can be connected by means of a main joint (TH) that extends through the support regions of the gearwheels to be supported in said housing or of the shafts connected thereto, wherein one of the partial housing units (10.1, 10.2) to be connected is formed from at least three housing parts: a central housing part (10.21) and two side housing parts (10.22, 10.23), wherein the central housing part (10.21) can be connected to an individual side housing part (10.23) in each case by means of a joint (T1, T2) aligned at an angle to the main joint (TH) ;
b) installation and/or positioning of a first partial housing unit (10.1), which is at the bottom in the installation position and is preferably of integral design;
c) installation of the large wheel (4) and optionally of a gearwheel in mesh with said large wheel in/on the first partial housing unit (10.1), preferably in the main joint of the first partial housing unit (10.1);
d) installation of the central housing part (10.21) so as to at least partially surround the large wheel (4), and connection to the first partial housing unit (10.1) at the main joint (TH);
e) installation of the gearwheels or optionally the additional gearwheels (3, 5, 6, 8) in mesh with the large wheel (4) and supported in the main joint (TH);
f) installation of the side housing parts (10.22, 10.23), involving connection to the central housing part (10.21) and to the first partial housing unit (10.1) to form a second partial housing unit (10.2) connected to the first partial housing unit (10.1).

21. Method for assembling a transmission turbomachine (2) according to Claim 20, **characterized in that** the transmission turbomachine (2) is designed as a transmission compressor, and the individual output units are embodied as compressors, wherein the rotors of the compressors are installed with the individual output shafts and, after installation of a rear wall on the first partial housing unit (10.1), the compressor housings are installed thereon.

22. Method for assembling a transmission turbomachine (2) according to Claim 21, **characterized in that** the large wheel (4) is used to drive an additional compressor stage, which is supported in the central housing part (10.21) and in a third partial housing (10.3), wherein the additional compressor stage is formed after the installation of the second partial housing unit (10.2).

## Revendications

1. Transmission (1), notamment transmission intégrale pour une turbomachine à transmission, dotée d'une roue de grand diamètre (4) et d'au moins deux roues dentées (3, 5, 6, 8) qui sont en prise au moins indirecte avec la roue de grand diamètre (4), qui sont reliées chacune avec un arbre susceptible d'être relié avec un groupe d'entraînement et/ou un groupe de sortie ou qui sont réalisées en version intégrale ;
dotée d'un carter (10), dans lequel sont logées les roues dentées, respectivement les arbres (13, 15, 16, 18) reliés avec celles-ci ;
à cet effet, le carter (10) comporte au moins deux unités partielles de carter (10.1, 10.2) :
une première unité partielle de carter (10.1), inférieure en position de montage et une deuxième unité partielle de carter (10.2) supérieure, verticalement décalée par rapport à cette dernière en position de montage, qui sont susceptibles d'être reliées par l'intermédiaire d'un joint partiel principal (TH) s'écoulant à travers la zone de logement (L3, L5, L6, L8) d'au moins une roue dentée (3, 5, 6, 8) qui est en prise au moins indirecte avec la roue de grand diamètre (4), respectivement avec l'arbre qui est relié avec celle-ci ;
**caractérisée en ce que** la deuxième unité partielle de carter (10.1, 10.2) est formée d'au moins trois parties de carter, une partie centrale de carter (10.21), laquelle réceptionne au moins une partie de la roue de grand diamètre (4) et deux parties latérales de carter (10.22, 10.23), reliées avec la partie centrale de carter (10, 21), la partie centrale de carter étant reliée avec une partie latérale de carter (10.23) individuelle chaque fois par l'intermédiaire d'un joint partiel (T1, T2) orienté sous un angle par rapport au joint partiel principal (TH).

2. Transmission (1) selon la revendication 1, **caractérisée en ce qu'**au moins une ou plusieurs roues dentées (3, 5, 6, 8) logées dans le joint partiel principal (TH) et en prise au moins indirecte avec la roue de grand diamètre (4) sont réceptionnées au moins partiellement par l'une des parties latérales de carter (10.22, 10.23).

3. Transmission (1) selon la revendication 1 ou 2, **caractérisée en ce que** la roue de grand diamètre (4) ou l'arbre de roue de grand diamètre (14) relié avec celle-ci ou conçu en version intégrale est logé(e) selon une possibilité de logement faisant partie du groupe suivant de possibilités de logement :
- dans le joint partiel principal, entre la première unité partielle de carter et la partie centrale de carter de la deuxième unité partielle de carter
- dans la première unité partielle de carter
- dans la partie centrale de carter.

4. Transmission (1) selon l'une quelconque des revendications 1 à 3, **caractérisée en ce qu'**au moins une roue dentée qui est en prise au moins indirecte avec la roue de grand diamètre (4) est formée d'une première roue dentée de sortie (5) susceptible d'être reliée avec un arbre de sortie (15, 16) ou réalisée en version intégrale, et **en ce que** la transmission (1) comprend encore au moins une ou plusieurs roues dentées supplémentaires, choisie(s) parmi le groupe suivant de roues dentées, lesquelles sont chacune en prise au moins indirecte avec la roue de grand diamètre (4) :
- une deuxième roue dentée de sortie (6) supplémentaire,
- une roue intermédiaire (8) dotée d'un arbre de roue intermédiaire (18), placée entre une roue dentée de sortie (5, 6) et la roue de grand diamètre (4) ;
- une roue dentée d'entraînement (3), dotée d'un arbre d'entraînement (13) ;
le joint partiel principal (TH) s'écoulant à travers les zones de logement (L3, 4, 5, 6, 8) d'au moins deux des roues dentées (3, 4, 5, 6, 8), de préférence à travers les zones de logement (L5, L6) chaque fois d'une roue dentée de sortie (5, 6) individuelle, de manière particulièrement préférentielle, à travers les zones de logement d'une roue dentée de sortie (5, 6) individuelle et de la roue dentée d'entraînement (3), de manière tout particulièrement préférentielle, à travers les zones de logement d'une roue dentée de sortie (5, 6) individuelle, de la roue dentée d'entraînement (3) et de la roue intermédiaire (8) .

5. Transmission (1) selon l'une quelconque des revendications 1 à 4, **caractérisée en ce que** la roue de grand diamètre (4) est conçue sous la forme d'une roue dentée d'entraînement, dotée d'un arbre de roue de grand diamètre (14) susceptible d'être relié avec un groupe d'entraînement et **en ce que** les roues dentées (5, 6, 8) qui sont en prise avec la roue de grand diamètre (4) sont formées chacune de roues dentées de sortie (5, 6) reliées de manière solidaire en rotation avec un arbre de sortie (15, 16) ou de roues dentées qui sont en prise avec une roue dentée de sortie (6) sous la forme de roues intermédiaires (8), les au moins deux unités partielles de carter (10.1, 10.2) étant susceptibles d'être reliées par l'intermédiaire d'un joint partiel principal (TH) s'écoulant à travers les zones de logement (L3, L5, L6, L8) d'au moins l'une des roues dentées de sortie (5, 6) et/ou d'une roue intermédiaire (8), respectivement de l'arbre chaque fois relié avec celle-ci.

6. Transmission (1) selon l'une quelconque des revendications 1 à 4, **caractérisée en ce que** les roues dentées qui sont en prise avec une roue de grand diamètre (4) sont formées d'une roue dentée d'entraînement (3) reliée de manière solidaire en rotation avec un arbre d'entraînement (A) et d'une première roue dentée de sortie (5) qui est en prise avec la roue de grand diamètre (4), dotée d'un arbre de sortie ou d'une roue intermédiaire (8), les au moins deux unités partielles de carter (10.1, 10.2) étant susceptibles d'être reliées par l'intermédiaire d'un joint partiel principal (TH) s'écoulant à travers les zones de logement (L3, L5, L6) d'au moins l'une des roues dentées de sortie (5, 6), de la roue dentée d'entraînement (3) et/ou de la roue intermédiaire (8), respectivement de l'arbre qui est relié avec celle-ci.

7. Transmission (1) selon l'une quelconque des revendications 1 à 6, **caractérisée en ce que** le joint partiel principal (TH) est conçu en s'écoulant à travers la zone de logement (L4) de la roue de grand diamètre (4) ou de l'arbre de la roue de grand diamètre (14) relié avec celle-ci.

8. Transmission (1) selon l'une quelconque des revendications précédemment citées, **caractérisée en ce que** le joint partiel (T1, T2) individuel, prévu entre la partie centrale de carter (10.21) et une partie latérale de carter (10.22, 10.23) de la deuxième unité partielle de carter (10.2) est conçu sous un angle de l'ordre de 39° à 150°, de préférence de 45° à 135°, de manière particulièrement préférentielle, de 90° par rapport au joint partiel principal.

9. Transmission (1) selon l'une quelconque des revendications précédemment citées, **caractérisée en ce que** le joint partiel (T1, T2) individuel, prévu entre la partie centrale de carter (10.21) et une partie latérale de carter (10.22, 10.23) de la deuxième unité partielle de carter (10.2), est placé à l'extérieur de la zone de logement (L3, L4, L5, L6, L8) d'une roue dentée (3, 4, 5, 6, 8) individuelle logée dans le joint partiel principal (TH) .

10. Transmission (1) selon la revendication 9, **caractérisée en ce que** le joint partiel (T1, T2) individuel, prévu entre la partie centrale de carter (10.21) et une partie latérale de carter (10.22, 10.23) de la deuxième unité partielle de carter (10.2), est placé à l'extérieur de la zone de logement (L4) de la roue de grand diamètre (4) ou de l'arbre de roue de grand diamètre (14) relié avec celle-ci et à l'intérieur d'une zone d'extension partant de l'axe de rotation de la roue de grand diamètre (4), considérée le long du joint partiel principal, laquelle correspond à la zone d'extension du diamètre extérieur de la roue de grand diamètre (4).

11. Transmission (1) selon l'une quelconque des revendications précédemment citées, **caractérisée en ce que** le joint partiel principal (TH) est conçu en s'écoulant dans un plan ou sous forme échelonnée.

12. Transmission (1) selon l'une quelconque des revendications précédemment citées, **caractérisée en ce que** les axes de rotation (R3, R4, R5, R6, R8) d'au moins deux des roues dentées (3, 4, 5, 6, 8) logées dans le joint partiel principal (TH), respectivement des arbres reliés avec celles-ci, sont placés dans un plan de placement commun ou des plans de placement différents (AE3, AE4, AE5, AE6, AE8).

13. Transmission (1) selon l'une quelconque des revendications précédemment citées, **caractérisée en ce qu'**il est prévu au moins une roue dentée (28), laquelle est reliée avec un arbre, susceptible d'être relié avec un groupe d'entraînement ou un groupe de sortie ou est conçue en version intégrale, et qui est en prise au moins indirecte avec la roue de grand diamètre (4), ainsi que logée à l'extérieur du joint partiel principal (TH), dans une unité partielle de carter (10.1), la roue dentée dotée d'un arbre étant conçue sous la forme d'un pignon à tourillon.

14. Transmission (1) selon l'une quelconque des revendications précédemment citées, **caractérisée en ce qu'**il est prévu au moins une roue dentée (7), laquelle est reliée avec un arbre, susceptible d'être relié avec un groupe d'entraînement ou un groupe de sortie ou conçu en version intégrale, laquelle est en prise avec la roue de grand diamètre (4) et réceptionnée par une troisième unité partielle de carter (10.3), reliée par l'intermédiaire d'un joint partiel (TH2) supplémentaire avec la partie centrale de carter (10.21).

15. Transmission (1) selon la revendication 14, **caractérisée en ce que** la première unité partielle de carter (10.1) est formée d'une partie inférieure de carter de transmission et la deuxième unité partielle de carter (10.2) est formée d'une partie supérieure de carter de transmission et **en ce que** la troisième unité partielle de carter (10.3) est formée d'un couvercle de carter de transmission supplémentaire, terminant la partie supérieure de carter de transmission ou d'une unité partielle de carter réceptionnant au moins partiellement au moins une roue dentée.

16. Transmission (1) selon l'une quelconque des revendications précédemment citées, **caractérisée en ce que**
- les parties latérales de carter (10.22, 10.23) sont reliées avec la partie centrale de carter (10.21) et/ou
- les parties latérales de carter (10.22, 10.23) et la partie centrale de carter (10.21) sont reliées avec la première unité partielle de carter (10.1) et/ou
- les unités partielles de carter (10.1, 10.2, 10.3) individuelles sont reliées par l'intermédiaire d'au moins une liaison, choisie dans le groupe suivant de liaisons, ou d'une association de celles-ci :
- liaison par complémentarité de force, notamment éléments de fixation ;
- liaison par complémentarité de forme.

17. Turbomachine à transmission (2) qui, par l'intermédiaire d'une transmission selon l'une quelconque des revendications 1 à 16, intègre des groupes d'entraînement et/ou de sortie (V11, V12, V21, V31, V32) par liaison avec les arbres (13, 15, 16, 17) individuels reliés avec les roues dentées d'entraînement et/ou de sortie (3, 5, 6, 7) en une ligne de machines.

18. Turbomachine à transmission (2) selon la revendication 17, **caractérisée en ce que** le groupe d'entraînement et/ou de sortie (V11, V12, V21, V31, V32 ; V1, V2, V3, V4) relié avec au moins l'un des arbres d'entraînement et/ou de sortie est un élément du groupe des éléments cités ci-dessous :
- un rotor d'au moins un étage de compresseur
- un rotor d'au moins un étage d'expanseur.

19. Turbomachine à transmission (2) selon l'une quelconque des revendications 17 et 18, **caractérisé en ce que** le groupe d'entraînement susceptible d'être accouplé avec la roue dentée d'entraînement (3) est une machine choisie dans le groupe des machines citées ci-dessous :
- moteur turbo
- turbine (11)
- moteur électrique (25)
- moteur à combustion interne.

20. Procédé, destiné au montage d'une turbomachine à transmission (2) selon l'une quelconque des revendications 17 à 19, comportant les étapes de procédé suivantes, consistant à :
a) mettre à disposition un carter qui comprend au moins deux unités partielles de carter, une première unité partielle de carter et une deuxième unité partielle de carter, qui sont susceptibles d'être reliées par l'intermédiaire d'un joint partiel principal (TH) s'écoulant à travers les zones de logement des roues dentées qui doivent être logées dans ce dernier, l'une des unités partielles de carter (10.1, 10.2) qui doivent être reliées étant formée d'au moins trois parties de carter : une partie centrale de carter (10.21) et deux parties latérales de carter (10.22, 10.23) la partie centrale de carter (10.21) étant susceptible d'être reliée avec une partie latérale de carter (10.23) individuelle, chaque fois par l'intermédiaire d'un joint partiel (T1, T2), orienté sous un angle par rapport au joint partiel principal (TH) ;
b) monter et/ou positionner une première unité partielle de carter (10.1), inférieure en position de montage, conçue de préférence en version intégrale ;
c) monter la roue de grand diamètre (4) et le cas échéant une roue dentée qui est en prise avec celle-ci dans/sur la première unité partielle de carter (10.1), de préférence dans le joint partiel principal de la première unité partielle de carter (10.1) ;
d) monter la partie centrale de carter (10.21) en entourant au moins en partie la roue de grand diamètre (4) et la relier avec la première unité partielle de carter (10.1) sur le joint partiel principal (TH) ;
e) monter les roues dentées (3, 5, 6, 8) ou, le cas échéant, celles supplémentaires qui sont en prise avec la roue de grand diamètre (4) et logées dans le joint partiel principal (TH) ;
f) monter les parties latérales de carter (10.22, 10.23) en les reliant avec la partie centrale de carter (10.21) et la première unité partielle de carter (10.1) en créant une deuxième unité partielle de carter (10.2) reliée avec la première unité partielle de carter (10.1).

21. Procédé, destiné au montage d'une turbomachine à transmission (2) selon la revendication 20, **caractérisée en ce que** la turbomachine à transmission (2) est conçue sous la forme d'un compresseur à transmission et les groupes de sortie individuels sont réalisés sous la forme de compresseurs, lors duquel on monte les rotors des compresseurs avec les arbres de sortie individuels et, après le montage d'une paroi arrière sur la première unité partielle de carter (10.1), on monte les carters de compresseurs sur celle-ci.

22. Procédé, destiné au montage d'une turbomachine à transmission (2) selon la revendication 21, **caractérisé en ce qu'**un étage de compresseur supplémentaire qui est logé dans la partie centrale de carter (10.21) et dans un troisième carter partiel (10.3) est entraîné avec la roue de grand diamètre (4), l'étage de compresseur supplémentaire étant effectué après le montage de la deuxième unité partielle de carter (10.2).
